(19) Europäisches Patentamt / European Patent Office / Office européen des brevets

(11) **EP 4 737 393 A1**

(12) **EUROPEAN PATENT APPLICATION**
published in accordance with Art. 153(4) EPC

(43) Date of publication:
06.05.2026 Bulletin 2026/19

(21) Application number: 24832003.8

(22) Date of filing: 26.06.2024

(51) International Patent Classification (IPC):
*C01G 23/053* (2006.01)    *C09C 1/36* (2006.01)
*C09C 1/40* (2006.01)    *C09D 7/61* (2018.01)
*C09D 17/00* (2006.01)    *C09D 201/00* (2006.01)

(52) Cooperative Patent Classification (CPC):
**C01G 23/053; C09C 1/36; C09C 1/40; C09D 7/61;
C09D 17/00; C09D 201/00**

(86) International application number:
**PCT/JP2024/023201**

(87) International publication number:
**WO 2025/005144 (02.01.2025 Gazette 2025/01)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 28.06.2023 JP 2023106407

(71) Applicant: Ishihara Sangyo Kaisha, Ltd.
Osaka-shi, Osaka 550-0002 (JP)

(72) Inventors:
• TAKIMOTO, Tadahiko
Osaka-shi, Osaka 550-0002 (JP)
• GOTO, Kouji
Osaka-shi, Osaka 550-0002 (JP)
• WASHIZU, Hiroki
Osaka-shi, Osaka 550-0002 (JP)

(74) Representative: Grünecker Patent- und
Rechtsanwälte
PartG mbB
Leopoldstraße 4
80802 München (DE)

(54) **DISPERSION OF TITANIUM DIOXIDE FINE PARTICLES IN ORGANIC SOLVENT, METHOD FOR PRODUCING SAME, AND USE OF SAME**

(57) The present invention addresses the problem of providing: a dispersion of titanium dioxide fine particles in an organic solvent, the dispersion having high dispersion stability; and a method for producing the same. The present invention provides a dispersion of titanium dioxide fine particles in an organic solvent, the dispersion containing: titanium dioxide fine particles in each of which a titanium component, a tin component, and an aluminum component are detected by X-ray fluorescence analysis measurement, and an X-ray diffraction peak derived from rutile titanium dioxide is observed but X-ray diffraction peaks derived from the tin component and the aluminum component are not observed by powder X-ray diffraction measurement; an organic solvent; a silane coupling agent; and a dispersant that has a basic adsorption group.

FIG. 1

Description

TECHNICAL FIELD

The present invention relates to an organic solvent dispersion of titanium dioxide fine particles, a method for producing the dispersion, and the intended use of the dispersion.

BACKGROUND ART

Titanium dioxide fine particles are a material having excellent characteristics such as a visible light transmittance (that is, transparency), an ultraviolet ray shielding property and a high refractive index. The use of the characteristics typically requires dispersing titanium dioxide fine particles in an organic solvent to prepare an organic solvent dispersion or a coating composition, and applying or spraying the dispersion or the coating composition to a substrate to form a paint film including the titanium dioxide fine particles.

The organic solvent dispersion of titanium dioxide fine particles is used, for example, to form a hard coat, an ultraviolet ray shielding coating film or the like, each having a high visible light transmittance (that is, transparency) and a high refractive index on a surface of a substrate such as a synthetic resin lens or a film. Additionally, an antireflection film in which a high-refractive-index layer and a low-refractive-index layer are combined is provided on a display surface of a flat panel display such as a liquid crystal display, a plasma display, or an electroluminescence display for the purpose of, for example, avoiding reflection of a light source or a face, and the organic solvent dispersion of titanium dioxide fine particles is used in the high-refractive-index layer.

However, the organic solvent dispersion of titanium dioxide fine particles has a problem that the titanium dioxide fine particles are likely to agglomerate in the organic solvent dispersion. Since the organic solvent dispersion including agglomerated titanium dioxide fine particles has low transparency, a paint film prepared using the organic solvent dispersion also results in reduced transparency. Further, in the organic solvent dispersion including agglomerated titanium dioxide fine particles, the titanium dioxide fine particles are settled in the course of production of the organic solvent dispersion, and thus, the yield of the organic solvent dispersion that can be used in the paint film reduces.

For the above reasons, studies have been performed on a method for obtaining an organic solvent dispersion of titanium dioxide fine particles, which has excellent dispersion stability.

For example, Patent Literature 1 discloses an organic solvent dispersion of titanium dioxide fine particles, the organic solvent including titanium dioxide fine particles, an organic solvent, a silane coupling agent, and a dispersant having a basic adsorption group, wherein a mass ratio of the above-mentioned dispersant to the above-mentioned silane coupling agent is 15 mass% to 75 mass%. Patent Literature 1 discloses in Example 2: "An organic solvent dispersion of titanium dioxide fine particles was obtained through the following steps: obtaining unfired titanium dioxide fine particles through the steps of adding a titanium tetrachloride aqueous solution to a tin tetrachloride aqueous solution such that a $SnO_2/TiO_2$ ratio can be 1, heating and hydrolyzing this mixture to obtain a slurry of tin-containing rutile-type titanium oxide, using the slurry to obtain a slurry of rutile-type titanium dioxide surface-treated with aluminum hydroxide in which aluminum hydroxide is deposited so as to be an amount of 15 mass% in terms of the amount of $Al_2O_3$, and drying the obtained slurry at 150°C; wet-dispersing the obtained unfired titanium dioxide fine particles, a silane coupling agent, a dispersant, and an organic solvent to obtain a dispersion; and centrifuging the obtained dispersion at 2,400 G for 13 minutes, and then collecting a supernatant thereof to obtain an organic solvent dispersion of titanium dioxide fine particles".

Patent Literature 2 discloses an organic solvent dispersion liquid of a core-shell-type tetragonal titanium oxide solid solution, wherein the core-shell-type tetragonal titanium oxide solid solution is dispersed in an organic solvent and has, as a core, tetragonal titanium oxide fine particles in which one or more elements ($M^0$) selected from the group consisting of gallium, vanadium, niobium, tantalum, zirconium, aluminum, and indium, and tin are present as a solid solution, and has, as a shell outside the core, silicon oxide. Also, the Patent Literature discloses in Example 6 the following: tin (IV) chloride pentahydrate and aluminum (III) chloride were added to an aqueous solution of titanium (IV) chloride, neutralized with aqueous ammonia, and hydrolyzed to obtain a precipitate of titanium hydroxide including tin and aluminum; and 30 mass% aqueous hydrogen peroxide was added to the precipitate to obtain a translucent tin-containing peroxotitanic acid solution; and then the translucent tin-containing peroxotitanic acid solution was hydrothermally treated in an autoclave under conditions of 200°C and 1.5 MPa for 120 minutes to obtain a titanium oxide dispersion liquid.

CITATION LIST

PATENT LITERATURE

PATENT LITERATURE 1: WO 2021/106747 A1
PATENT LITERATURE 2: JP 2015-221742 A

## SUMMARY OF INVENTION

### TECHNICAL PROBLEM

However, since both of the organic solvent dispersions of titanium dioxide fine particles disclosed in Patent Literatures 1 and 2 have poor dispersion stability, an organic solvent dispersion of titanium dioxide fine particles having higher dispersion stability is desired.

### SOLUTION TO PROBLEM

The present inventors have intensively studied to improve the dispersion stability of an organic solvent dispersion including titanium dioxide fine particles, and have found that it is effective to use titanium dioxide fine particles in which a tin component and an aluminum component are detected, and an X-ray diffraction peak derived from rutile-type titanium dioxide (or only an X-ray diffraction peak derived from rutile-type titanium dioxide) is observed and X-ray diffraction peaks derived from a tin component and an aluminum component are not observed by means of powder X-ray diffraction measurement, and that an organic solvent dispersion including the above-mentioned titanium dioxide fine particles, a silane coupling agent, a dispersant having a basic adsorption group, and an organic solvent has higher dispersion stability, thereby completing the present invention.
That is, the present invention is as follows.

(1) An organic solvent dispersion of titanium dioxide fine particles, comprising:

the titanium dioxide fine particles in which a titanium component, a tin component and an aluminum component are detected by means of X-ray fluorescent analysis measurement, and an X-ray diffraction peak derived from rutile-type titanium dioxide is observed and X-ray diffraction peaks derived from a tin component and an aluminum component are not observed by means of powder X-ray diffraction measurement;
an organic solvent;
a silane coupling agent; and
a dispersant having a basic adsorption group.

(2) An organic solvent dispersion of titanium dioxide fine particles comprising:

the titanium dioxide fine particles in which a titanium component, a tin component and an aluminum component are detected by means of X-ray fluorescent analysis measurement, and only an X-ray diffraction peak derived from rutile-type titanium dioxide is observed and X-ray diffraction peaks derived from a tin component and an aluminum component are not observed by means of powder X-ray diffraction measurement;
an organic solvent;
a silane coupling agent; and
a dispersant having a basic adsorption group.

(3) The organic solvent dispersion of titanium dioxide fine particles according to (1) or (2), wherein the titanium dioxide fine particles comprise titanium dioxide fine particles in which a tin component and an aluminum component are present as a solid solution.
(4) The organic solvent dispersion of titanium dioxide fine particles according to any one of (1) to (3), wherein a total amount of an amount of the tin component and an amount of the aluminum component with respect to an amount of the titanium component in the titanium dioxide fine particles is 0.6 mass% or more and 30 mass% or less when expressed as a mass ratio given by $[(\text{amount of } SnO_2 + \text{amount of } Al_2O_3) / \text{amount of } TiO_2]$, wherein the amount of $TiO_2$ is the amount of the titanium component in terms of the amount of $TiO_2$, the amount of $SnO_2$ is the amount of the tin component in terms of the amount of $SnO_2$, and the amount of $Al_2O_3$ is the amount of the aluminum component in terms of the amount of $Al_2O_3$.
(5) The organic solvent dispersion of titanium dioxide fine particles according to any one of (1) to (4), wherein the amount of the tin component with respect to the amount of the aluminum component is 0.01 mass% or more and 40 mass% or less when expressed as a mass ratio given by $[\text{amount of } SnO_2/\text{amount of } Al_2O_3]$, wherein the amount of $Al_2O_3$ is the amount of the aluminum component in terms of the amount of $Al_2O_3$, and the amount of $SnO_2$ is the amount of the tin component in terms of the amount of $SnO_2$.

(6) The organic solvent dispersion of titanium dioxide fine particles according to any one of (1) to (5), wherein a mass ratio of the dispersant having a basic adsorption group to the silane coupling agent is 15 mass% or more and 75 mass% or less.

(7) The organic solvent dispersion of titanium dioxide fine particles according to any one of (1) to (6), wherein the titanium dioxide fine particles comprise titanium dioxide fine particles in which one or more components selected from the group consisting of a silicon component, a cobalt component and a manganese component are further detected by means of X-ray fluorescence measurement, and X-ray diffraction peaks derived from one or more components selected from the group consisting of a silicon component, a cobalt component and a manganese component are not observed by means of powder X-ray diffraction measurement.

(8) The organic solvent dispersion of titanium dioxide fine particles according to any one of (1) to (7), wherein the titanium dioxide fine particles comprise titanium dioxide fine particles in which one or more components selected from the group consisting of the silicon component, the cobalt component and the manganese component are present as a solid solution.

(9) The organic solvent dispersion of titanium dioxide fine particles according to any one of (1) to (8), wherein surfaces of the titanium dioxide fine particles are coated with an inorganic compound.

(10) A coating composition comprising the organic solvent dispersion of titanium dioxide fine particles according to any one of (1) to (9), and a binder resin.

(11) A paint film comprising the organic solvent dispersion of titanium dioxide fine particles according to any one of (1) to (9), and a binder resin.

(12) A composition for nanoimprinting comprising the organic solvent dispersion of titanium dioxide fine particles according to any one of (1) to (9), and a binder resin.

(13) A method for producing an organic solvent dispersion of titanium dioxide fine particles, the method comprising the step of dispersing, in an organic solvent, the following:

    titanium dioxide fine particles in which a titanium component, a tin component and an aluminum component are detected by means of X-ray fluorescence measurement, and an X-ray diffraction peak derived from rutile-type titanium dioxide is observed and X-ray diffraction peaks derived from a tin component and an aluminum component are not observed by means of powder X-ray diffraction measurement;
    a silane coupling agent; and
    a dispersant having a basic adsorption group.

(14) A method for producing an organic solvent dispersion of titanium dioxide fine particles, the method comprising the step of dispersing, in an organic solvent, the following:

    titanium dioxide fine particles in which a titanium component, a tin component and an aluminum component are detected by means of X-ray fluorescence measurement, and only an X-ray diffraction peak derived from rutile-type titanium dioxide is observed and X-ray diffraction peaks derived from a tin component and an aluminum component are not observed by means of powder X-ray diffraction measurement;
    a silane coupling agent; and
    a dispersant having a basic adsorption group.

(15) The method for producing an organic solvent dispersion of titanium dioxide fine particles according to (13) or (14), further comprising centrifuging the organic solvent dispersion.

(16) The method for producing an organic solvent dispersion of titanium dioxide fine particles according to any one of (13) to (15), wherein the titanium dioxide fine particles are produced by the following steps:

    Step (1): a step of hydrolyzing a mixture of titanium (oxy)chloride and a tin compound, or a step of hydrolyzing titanium (oxy)chloride in the presence of core particles obtained by hydrolyzing a tin compound;
    Step (2): a step of mixing a product obtained by the hydrolysis in the Step (1) and an aluminum compound; and
    Step (3): a step of performing a treatment comprising firing the mixture of the product obtained by the hydrolysis in the Step (1) and the aluminum compound at a temperature of 250°C or higher and 1,000°C or lower.

(17) The method for producing an organic solvent dispersion of titanium dioxide fine particles according to (16), wherein the Step (1) is a step of hydrolyzing a mixture of titanium (oxy)chloride, a tin compound, and a carboxylic acid or a salt thereof, or a step of adding titanium (oxy)chloride, and a carboxylic acid or a salt thereof in the presence of core particles obtained by hydrolyzing a tin compound, and hydrolyzing the titanium (oxy)chloride.

## ADVANTAGEOUS EFFECTS OF INVENTION

According to the present invention, an organic solvent dispersion including titanium dioxide fine particles and having high dispersion stability can be obtained.

## BRIEF DESCRIPTION OF DRAWINGS

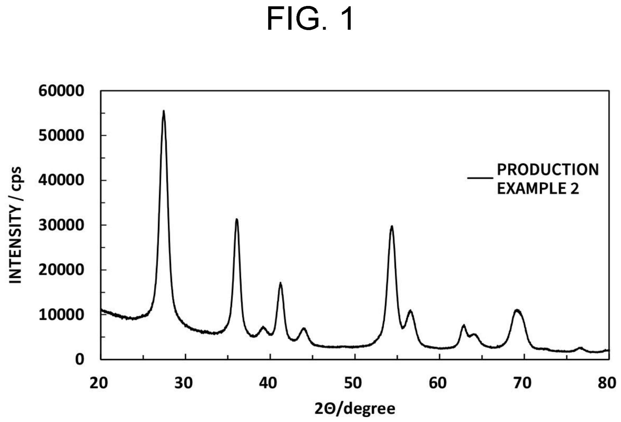

FIG. 1 shows an X-ray diffraction spectrum of titanium dioxide fine particles of Production Example 2.

## DESCRIPTION OF EMBODIMENTS

The present invention relates to an organic solvent dispersion of titanium dioxide fine particles including the following: titanium dioxide fine particles in which a titanium component, a tin component and an aluminum component are detected by means of X-ray fluorescence measurement, and an X-ray diffraction peak derived from rutile-type titanium dioxide is observed and X-ray diffraction peaks derived from a tin component and an aluminum component are not observed by means of powder X-ray diffraction measurement; an organic solvent; a silane coupling agent; and a dispersant having a basic adsorption group.

Or, the present invention relates to an organic solvent dispersion of titanium dioxide fine particles including the following: titanium dioxide fine particles in which a titanium component, a tin component and an aluminum component are detected by means of X-ray fluorescence measurement, and only an X-ray diffraction peak derived from rutile-type titanium dioxide is observed and X-ray diffraction peaks derived from a tin component and an aluminum component are not observed by means of powder X-ray diffraction measurement; an organic solvent; a silane coupling agent; and a dispersant having a basic adsorption group.

The organic solvent dispersion according to the present invention has excellent dispersion stability. The dispersion stability can be evaluated from the yield (which is also referred to as a "dispersion yield") and the transparency of the organic solvent dispersion.

The yield of the above-mentioned organic solvent dispersion is calculated by dividing the concentration of titanium dioxide fine particles remaining in a supernatant liquid, which is obtained by means of centrifugation of the organic solvent dispersion including the above-mentioned titanium dioxide fine particles under conditions of 2,400G and 30 minutes, by the concentration of the titanium dioxide fine particles included in the above-mentioned organic solvent dispersion before the centrifugation.

When the above-mentioned dispersion yield is 50% or more, it can be determined that an excellent yield is achieved. The above-mentioned dispersion yield is more preferably 70% or more, and still more preferably 80% or more.

The above-mentioned transparency is evaluated by the average spectral transmittance of the organic solvent dispersion under visible light in the wavelength range of 380 nm to 780 nm. The above-mentioned average spectral transmittance is measured in the following manner.

An organic solvent dispersion in which the concentration of titanium dioxide fine particles is 12 g/L is prepared as a measurement sample. The prepared measurement sample is placed in a 10 mm quartz cell, and the average spectral transmittance in the wavelength range of 380 nm to 780 nm is measured. As a spectrophotometer, for example, an UV -Visible/NIR spectrophotometer (V-770 manufactured by JASCO Corporation) can be used.

When the above-mentioned average spectral transmittance is 25% or more, it can be determined that excellent transparency is achieved. The above-mentioned average spectral transmittance is more preferably 28% or more, and still more preferably 30% or more.

In the organic solvent dispersion according to the present invention, it can be determined that in the case where the above-mentioned dispersion yield thereof is 50% or more and the above-mentioned average spectral transmittance is 25% or more, excellent dispersion stability is achieved. It is more preferred that the above-mentioned yield is 70% or more and the above-mentioned average spectral transmittance is 28% or more, and it is still more preferred that the above-mentioned yield is 80% or more and the above-mentioned average spectral transmittance is 30% or more.

The size of dispersed particles in the organic solvent dispersion according to the present invention is preferably the volume-based cumulative 50% particle diameter (D50) of 10 nm or more and 50 nm or less, and more preferably 10 nm or more and 40 nm or less. Also, the size of dispersed particles in the organic solvent dispersion according to the present invention is preferably the volume-based cumulative 90% particle diameter (D90) of 30 nm or more and 70 nm or less, and more preferably 30 nm or more and 60 nm or less. When the size of dispersed particles is within the above-mentioned range, an organic solvent dispersion having high transparency can be achieved.

The dispersed particle size in the organic solvent dispersion can be measured by means of a dynamic light scattering particle size analyzer (NANOTRAC (registered trademark) WAVE II EX150, manufactured by MicrotracBEL Corp.) or the like. The values of the refractive index and the viscosity of the solvent are set to the values shown below depending on the type of solvent to be used. When the organic solvent in the above-mentioned organic solvent dispersion is propylene glycol monomethyl ether, the measurement conditions are as described below.

∘ Measurement conditions:

(1) Solvent: Propylene glycol monomethyl ether (which is also referred to as a "PGME" hereinafter), with a refractive index of 1.4 and a viscosity of 1.75 (at 25°C) to 1.55 (at 30°C);
(2) Particle refractive index: 2.55;
(3) Particle density: 4.2 g/cm$^3$; and
(4) Loading index: 0.1 to 0.3.

The dispersed particle size in the organic solvent dispersion can be measured by means of a dynamic light scattering particle size analyzer (NANOTRAC (registered trademark) WAVE II EX150, manufactured by MicrotracBEL Corp.) or the like. When the organic solvent in the above-mentioned organic solvent dispersion is propylene glycol monomethyl ether acetate, the measurement conditions are as described below.

∘ Measurement conditions:

(1) Solvent: Propylene glycol monomethyl ether acetate (which is also referred to as a "PGMEA" hereinafter), with a refractive index of 1.4 and a viscosity of 1.098 (at 20°C) to 0.948 (at 30°C);
(2) Particle refractive index: 2.55;
(3) Particle density: 4.2 g/cm$^3$; and
(4) Loading index: 0.1 to 0.3.

Also, regarding the size of dispersed particles in the organic solvent dispersion according to the present invention, the ratio of D50 and D90 (D50/D90) as mentioned above is preferably 0.3 or more and 1.0 or less, and more preferably 0.5 or more and 1.0 or less. Accordingly, the lower limit value is preferably 0.3 or more, and more preferably 0.5 or more. The upper limit value is preferably 1.0 or less, and more preferably less than 1.0.

The D50/D90 ratio means the ratio of coarse particles included in the organic solvent dispersion, and the closer the value thereof is to 1, the fewer coarse particles are present. The D50/D90 ratio is preferably within the above-mentioned range because fewer coarse particles result in excellent dispersion stability.

The organic solvent dispersion according to the present invention includes titanium dioxide fine particles in which a titanium component, a tin component and an aluminum component are detected by means of X-ray fluorescence measurement, and an X-ray diffraction peak derived from rutile-type titanium dioxide is observed and X-ray diffraction peaks derived from a tin component and an aluminum component are not observed by means of powder X-ray diffraction measurement.

The organic solvent dispersion according to the present invention includes titanium dioxide fine particles in which a titanium component, a tin component and an aluminum component are detected by means of X-ray fluorescence measurement, and only an X-ray diffraction peak derived from rutile-type titanium dioxide is observed and X-ray diffraction peaks derived from a tin component and an aluminum component are not observed by means of powder X-ray diffraction measurement.

By using such titanium dioxide fine particles, the dispersion stability of the titanium dioxide fine particles in the organic solvent dispersion can be improved. Additionally, by using the above-mentioned titanium dioxide fine particles, gelation in preparation of an organic solvent dispersion can be avoided.

In the present application, the phrase "an X-ray diffraction peak is not observed" is defined as a diffraction peak whose intensity is equal to or less than 1/100 when subtracting a baseline from the peak intensity at the (110) plane (about 27.5°) that is a main peak for rutile-type titanium dioxide fine particles.

The X-ray diffraction peak derived from the above-mentioned rutile-type titanium dioxide are identified with reference to the values disclosed in a literature (RSC Adv., 2020, 10, 43592-43598), based on at least three diffraction peaks selected from the stronger side in terms of intensity. As an apparatus for obtaining the above-mentioned X-ray diffraction peak, for example, an X-ray diffractometer (Ultima IV, manufactured by Rigaku Corporation) can be used. From the viewpoint of measurement accuracy, a peak appearing within a range of ±0.5° of each observed peak is regarded as being within the margin of measurement error, and preferably within ±0.2°.

As an X-ray fluorescence spectrometer for detecting a titanium component, a tin component and an aluminum component in the titanium dioxide fine particles used in the present invention, for example, ZSX Primus IV manufactured by Rigaku Corporation can be used.

The amounts of components detected by means of X-ray fluorescence analysis represent the total amounts of the components present in the titanium dioxide fine particles, for example, the total of the amount of the component that is present as a solid-solution in the titanium dioxide fine particles, the amount of the component that is present on the surfaces of the titanium dioxide fine particles, and the like.

The ratio of the tin component in the titanium dioxide fine particles used in the present invention is preferably 0.1 mass% or more and 20 mass% or less, and more preferably 2 mass% or more and 7 mass% or less when expressed as an oxide-equivalent mass ratio of the amount of the tin component in terms of the amount of $SnO_2$ to the amount of the titanium component (specifically, the amount of titanium dioxide (i.e., the amount of $TiO_2$)) included in the titanium dioxide fine particles (i.e., the amount of $SnO_2$/ the amount of $TiO_2$).

The ratio of the aluminum component in the titanium dioxide fine particles used in the present invention is preferably 0.5 mass% or more and 10 mass% or less, and more preferably 2 mass% or more and 8 mass% or less when expressed as an oxide-equivalent mass ratio of the amount of the aluminum component in terms of the amount of $Al_2O_3$ to the amount of the titanium component (specifically, the amount of titanium dioxide (i.e., the amount of $TiO_2$)) included in the titanium dioxide fine particles (i.e., the amount of $Al_2O_3$/the amount of $TiO_2$).

The ratio of a total of the amount of the tin component and the amount of the aluminum component in the titanium dioxide fine particles used in the present invention is preferably 0.6 mass% or more and 30 mass% or less, and more preferably 4 mass% or more and 15 mass% or less when expressed as an oxide equivalent mass ratio of the amount of the tin component in terms of the amount of $SnO_2$ and the amount of the aluminum component in terms of the amount of $Al_2O_3$ to the amount of titanium dioxide (i.e., the amount of $TiO_2$) included in the titanium dioxide fine particles (i.e., (the amount of $SnO_2$ + the amount of $Al_2O_3$) / the amount of $TiO_2$).

The ratio of the tin component to the aluminum component in the titanium dioxide fine particles used in the present invention is preferably 0.01 mass% or more and 40 mass% or less, and more preferably 0.1 mass% or more and 4.0 mass% or less when expressed as an oxide equivalent mass ratio of the tin component in terms of the amount of $SnO_2$ to the amount of the $Al_2O_3$ component in terms of the amount of $Al_2O_3$ (i.e., (the amount of $SnO_2$ / the amount of $Al_2O_3$).

When performing X-ray fluorescence analysis of the titanium dioxide fine particles used in the present invention, in addition to the titanium component, the tin component and the aluminum component, one or more third components may be detected. The detection of the third component allows for improved light resistance (that is, reduced photocatalytic activity) and controlled particle shape during firing. Specific examples of the third component include a silicon component, a zirconium component, a zinc component, a cobalt component, a niobium component, a manganese component and so on. Among them, a silicon component, a cobalt component, a manganese component and so on are particularly preferred. Specific examples of the compound include $SiO_2$, $ZrO_2$, $ZnO$, $CoO$, $Nb_2O_5$, $Co_2O_3$ and $MnO$. Among these, $SiO_2$, $Co_2O_3$ and $MnO$ are preferred.

When the content of the third component is expressed as an oxide equivalent mass ratio of the amount of the tin component in terms of the amount of $SnO_2$, the aluminum component in terms of the amount of $Al_2O_3$ and the third component in terms of the amount of an oxide of the third component, to the amount of titanium dioxide (i.e., the amount of $TiO_2$) included in the titanium dioxide fine particles (i.e., (the amount of $SnO_2$ + the amount of $Al_2O_3$ + the amount of the oxide of the third component) / the amount of $TiO_2$), the oxide equivalent mass ratio (i.e., (the amount of $SnO_2$ + the amount of $Al_2O_3$ + the amount of the oxide of the third component) / the amount of $TiO_2$) is preferably 0.6 mass% or more and 30 mass% or less, and more preferably 4 mass% or more and 15 mass% or less.

When the above-mentioned third component is a silicon component and the amount thereof is expressed as an oxide equivalent mass ratio of the amount of the silicon component in terms of the amount of $SiO_2$ to the amount of titanium dioxide (i.e., the amount of $TiO_2$) included in the titanium dioxide fine particles (i.e., the amount of $SiO_2$/ the amount of $TiO_2$), the oxide equivalent mass ratio (i.e., the amount of $SiO_2$/ the amount of $TiO_2$) is preferably 0.5 mass% or more and 10 mass% or less, and more preferably 1 mass% or more and 5 mass% or less when expressed as an oxide equivalent mass ratio to the amount of titanium dioxide (i.e., the amount of $TiO_2$) included in the titanium dioxide fine particles (i.e., amount of $SiO_2$/amount of $TiO_2$).

When the above-mentioned third component is a cobalt component and the amount thereof is expressed as an oxide equivalent mass ratio of the amount of the cobalt component in terms of the amount of $Co_2O_3$ to the amount of titanium dioxide (i.e., the amount of $TiO_2$) included in the titanium dioxide fine particles (i.e., the amount of $Co_2O_3$ / the amount of $TiO_2$), the oxide equivalent mass ratio (i.e., the amount of $Co_2O_3$ / the amount of $TiO_2$) is preferably 0.05 mass% or more and 5 mass% or less, and more preferably 0.07 mass% or more and 3 mass% or less.

When the above-mentioned third component is a manganese component and the amount thereof is expressed as an oxide equivalent mass ratio of the amount of the manganese component in terms of the amount of $MnO$ to the amount of titanium dioxide (i.e., the amount of $TiO_2$) included in the titanium dioxide fine particles (i.e., the amount of $MnO$ / the amount of $TiO_2$), the oxide equivalent mass ratio (i.e., the amount of $MnO$ / the amount of $TiO_2$) is preferably 0.05 mass% or more and 5 mass% or less, and more preferably 0.07 mass% or more and 3 mass% or less.

The organic solvent dispersion according to the present invention preferably includes titanium dioxide fine particles in which a tin component and an aluminum component are present as a solid solution. That is, the titanium dioxide fine particles that constitute the organic solvent dispersion according to the present invention, in which a titanium component, a tin component and an aluminum component are detected by means of X-ray fluorescence measurement, and in which an X-ray diffraction peak derived from rutile-type titanium dioxide is observed and X-ray diffraction peaks derived from a tin component and an aluminum component are not observed by means of powder X-ray diffraction measurement preferably include titanium dioxide fine particles in which a tin component and an aluminum component are present as a solid solution. This means that all of the titanium dioxide fine particles in which a titanium component, a tin component and an aluminum component are detected by means of X-ray fluorescence measurement, and in which an X-ray diffraction peak derived from rutile-type titanium dioxide is observed and X-ray diffraction peaks derived from a tin component and an aluminum component are not observed by means of powder X-ray diffraction measurement may be titanium dioxide fine particles in which a tin component and an aluminum component are present as a solid solution, or only some of the fine particles may be titanium dioxide fine particles in which a tin component and an aluminum component are present as a solid solution. In the titanium dioxide fine particles in which a titanium component, a tin component and an aluminum component are detected by means of X-ray fluorescence measurement, and an X-ray diffraction peak derived from rutile-type titanium dioxide is observed and X-ray diffraction peaks derived from a tin component and an aluminum component are not observed by means of powder X-ray diffraction measurement, the ratio of titanium dioxide fine particles in which the tin component and the aluminum component are present as a solid solution is preferably high, and it is particularly preferred that all the fine particles are titanium dioxide fine particles in which a tin component and an aluminum component are present as a solid solution.

In the present application, the term "solid solution" means a state having a phase in which an atom at a lattice point of one particular crystal phase is replaced with another atom, or in which another atom enters a lattice gap, namely, a state having a mixed phase in which another substance is regarded as being dissolved in one particular crystal phase, the state being a homogeneous phase as the crystal phase.

A substitutional type refers to a state in which a solvent atom at a lattice point is replaced with a solute atom, while an interstitial type refers to a state in which a solute atom enters an interstitial space. In the present specification, the term "solid solution" includes both of these states.

Specifically, when the solid solution state is of the substitutional type, a titanium site in a crystal lattice of each of titanium dioxide fine particles is replaced with a tin atom or an aluminum atom. When the solid solution state is of the interstitial type, a tin atom or an aluminum atom enters an interstitial space in a crystal of each of the titanium dioxide fine particles.

The fact that a tin component and an aluminum component are present as a solid solution in the above-mentioned titanium dioxide fine particles can be confirmed by a shift of the diffraction peak derived from titanium dioxide by means of X-ray diffraction.

When titanium dioxide fine particles in which a tin component and an aluminum component are present as a solid solution are used, the dispersion stability of the organic solvent dispersion can be improved compared to when using the titanium dioxide fine particles in which the tin component and the aluminum component are not present as a solid solution are used.

This is presumably because, when the above-mentioned components are present as a solid solution in the titanium dioxide fine particles, the abundance of coarse particles, particles having a large aspect ratio, and the like is reduced. This makes the particle size distribution and the particle shape uniform, so that the dispersion stability of the titanium dioxide fine particles in the organic solvent dispersion can be improved.

In addition to the tin component and the aluminum component, one or more third components may be present as a solid solution in the titanium dioxide fine particles used in the present invention. The third component that is present as a solid solution allows for improved light resistance (that is, reduced photocatalytic activity) and controlled particle shape during firing. Specific examples of the third component that is present as a solid solution include a silicon component (Si), a zirconium component (Zr), a zinc component (Zn), a cobalt component (Co), a niobium component (Nb), and a manganese component (Mn). Among these components, a silicon component, a cobalt component, and a manganese component are particularly preferred.

The organic solvent dispersion according to the present invention may include a fired product of titanium dioxide fine particles, which is obtained by firing titanium dioxide fine particles in which a tin component is present as a solid solution and an aluminum compound, as the titanium dioxide fine particles in which a titanium component, a tin component and an aluminum component are detected by means of X-ray fluorescence measurement, and an X-ray diffraction peak derived from rutile-type titanium dioxide is observed and X-ray diffraction peaks derived from a tin component and an aluminum component are not observed by means of powder X-ray diffraction measurement.

The organic solvent dispersion according to the present invention may include a fired product of titanium dioxide fine particles, which is obtained by firing titanium dioxide fine particles in which a tin component is present as a solid solution and an aluminum compound, as the titanium dioxide fine particles in which a titanium component, a tin component and an aluminum component are detected by means of X-ray fluorescence measurement, and only an X-ray diffraction peak derived from rutile-type titanium dioxide is observed and X-ray diffraction peaks derived from a tin component and an aluminum component are not observed by means of powder X-ray diffraction measurement.

By using, as the titanium dioxide fine particles in which a titanium component, a tin component and an aluminum component are detected by means of X-ray fluorescence measurement, and an X-ray diffraction peak derived from rutile-type titanium dioxide (or only an X-ray diffraction peak derived from rutile-type titanium dioxide) is observed and X-ray diffraction peaks derived from a tin component and an aluminum component are not observed by means of powder X-ray diffraction measurement, the titanium dioxide fine particles that are a fired product obtained by firing the titanium dioxide fine particles in which the above-mentioned tin component is present as a solid solution and an aluminum compound, the dispersion stability of the titanium dioxide fine particles in the organic solvent dispersion can be improved.

Also, the organic solvent dispersion according to the present invention may include, as the titanium dioxide fine particles used in the organic solvent dispersion, a fired product of titanium dioxide fine particles, which is obtained by firing titanium dioxide fine particles in which a tin component is present as a solid solution, an aluminum compound, and one or more compounds selected from the group consisting of a silicon compound, a cobalt compound, and a manganese compound.

The use of titanium dioxide fine particles that are a fired product of the titanium dioxide fine particles in which the above-mentioned tin component is present as a solid solution, an aluminum compound, and one or more compounds selected from the group consisting of a silicon compound, a cobalt compound and a manganese compound allows for improved light resistance (that is, reduced photocatalytic activity) and controlled particle shape during firing.

In the titanium dioxide fine particles before firing, the aluminum compound may be present in any state. For example, the aluminum compound may be present as a solid solution in the titanium dioxide fine particles together with a tin component, or may be present as an aluminum compound on the surfaces of the titanium dioxide fine particles in which the tin component is present as a solid solution.

The type of the aluminum compound in the titanium dioxide fine particles before the above-mentioned firing is not particularly limited, but an aluminum hydroxide is preferred. Examples of crystal structures of such an aluminum hydroxide include boehmite, gibbsite, pseudoboehmite, and bayerite, which are representative of hydrous aluminum oxides and hydroxides. Two or more of these aluminum hydroxides having different crystal structures may be present in the titanium dioxide fine particles before the above firing.

Also, in the titanium dioxide fine particles before firing, one or more compounds selected from the group consisting of a silicon compound, a cobalt compound and a manganese compound may be present in any state. For example, one or more components selected from the group consisting of a silicon component, a cobalt component and a manganese component may be incorporated into the titanium dioxide fine particles by solid solution together with a tin component, or one or more compounds selected from the group consisting of a silicon compound, a cobalt compound, and a manganese compound may be present on the surface of the titanium dioxide fine particles in which the tin component is incorporated by solid solution. Each component may be present in mutually different states.

The fired product of the above-mentioned titanium dioxide fine particles and the aluminum compound may be in a state in which at least one part of the aluminum component is present as a solid solution in the titanium dioxide fine particles, or in which the aluminum compound is present on the surfaces of the titanium dioxide fine particles.

Also, the fired product of the above-mentioned titanium dioxide fine particles and the aluminum compound, and one or more compounds selected from the group consisting of a silicon compound, a cobalt compound, and a manganese compound may be, in addition to the above-mentioned state, in a state in which at least one part of one or more components selected from the group consisting of a silicon component, a cobalt component, and a manganese component is present as a solid solution in the titanium dioxide fine particles, or may be present on the surfaces of the titanium dioxide fine particles. Further, each component may be present in mutually different states.

The above-mentioned phrase "may be present on the surfaces of the titanium dioxide fine particles" means that the entire surface of each of the above mentioned titanium dioxide fine particles may be coated, or each of the compounds (i.e., aluminum, silicon, cobalt, and manganese) that is present on the surfaces of the titanium dioxide fine particles may be present in an island shape and coat only a part of the surfaces.

The shape of the titanium dioxide fine particles used in the present invention is not particularly limited, and the titanium dioxide fine particles having any shape, such as a spherical shape, a rod shape, a needle shape, a spindle shape, or a plate shape, can be used. The average primary particle size of the above titanium dioxide fine particles in the case of a shape other than a spherical shape is defined as the average of lengths along the short axis for rod-shaped particles, needle-shaped particles and spindle-shaped particles, and the average primary particle size of the above titanium dioxide fine particles in the case of a plate shape is defined as the average of diagonal lengths of their faces.

The average primary particle size of the titanium dioxide fine particles (which mean the titanium dioxide fine particles after firing in the case of a fired product of the titanium dioxide fine particles and each compound) used in the present invention is preferably 1 nm or more and 50 nm or less, more preferably 3 nm or more and 40 nm or less, and still more preferably 5 nm or more and 30 nm or less.

The average primary particle size of the titanium dioxide fine particles used in the present invention is determined by measuring the primary particle sizes, expressed as equivalent circle diameters (i.e., Heywood diameters), for 200 or more randomly selected particles under an electron microscope, and calculating the median value based on the number distribution of the measured primary particle sizes (This method is referred to as the "electron microscopy" in the present application.).

In calculating the average primary particle size of the above-mentioned titanium dioxide fine particles, an image analysis software may be used. As the above-mentioned image analysis software, for example, Mac View Version 4.0 (Mountech Co., Ltd.) may be used.

Titanium dioxide fine particles having such an average primary particle size have a higher visible light transmittance compared to titanium dioxide particles having a larger average primary particle size (e.g., titanium dioxide particles that are used in the intended use of pigments and have an average primary particle size of about 0.2 to 0.5 $\mu$m).

Therefore, by using titanium dioxide fine particles having the above-mentioned average primary particle size, an organic solvent dispersion having higher transparency can be obtained.

The aspect ratio of the titanium dioxide fine particles used in the present invention is preferably 1.0 or more and 2.5 or less, and more preferably 1.0 or more and 2.0 or less.

The above-mentioned aspect ratio is calculated as follows.

Regarding 200 or more primary particles that are randomly selected from the primary particles observed by means of an electron microscope, the major axis (i.e., the length of the longer side of the circumscribed rectangle with the minimum area for each of the selected primary particles) and the minor axis (i.e., the length of the shorter side of the circumscribed rectangle with the minimum area for each of the selected primary particles) are measured by means of image analysis software Mac View Version 4.0 (Mountech Co., Ltd.), and then by dividing the above-mentioned major axis by the above-mentioned minor axis, the aspect ratio (i.e., the aspect ratio of each of the above-mentioned 200 or more primary particles) is calculated. The average value of the above-mentioned aspect ratios of the above-mentioned 200 or more primary particles is defined as the "aspect ratio of the titanium dioxide fine particles used in the present invention".

The specific surface area of the titanium dioxide fine particles used in the present invention is preferably 40 m$^2$/g or more and 300 m$^2$/g or less, more preferably 70 m$^2$/g or more and 200 m$^2$/g or less, and still more preferably 100 m$^2$/g or more and 180 m$^2$/g or less. By using titanium dioxide fine particles having such a specific surface area, an organic solvent dispersion having higher transparency can be obtained.

The specific surface area of the titanium dioxide fine particles can be determined using a nitrogen adsorption method (i.e., BET method) using an automatic flow-type specific surface area measuring apparatus (FlowSorb II 2300, manufactured by Shimadzu Corporation).

The crystal structure of the titanium dioxide fine particles used in the present invention is not particularly limited, and titanium dioxide fine particles having a crystal structure of anatase type, rutile type, brookite type or the like can be used. However, since the rutile-type crystal has lower photocatalytic activity and a higher refractive index as compared to the anatase-type crystal, it is preferred to use titanium dioxide fine particles having a rutile-type crystal for more effectively imparting high light resistance and a high refractive index to a paint film.

When the crystal structure of the titanium dioxide fine particles is a rutile type, the rutile ratio of the above-mentioned titanium dioxide fine particles is preferably 90% or more, more preferably 95% or more. The rutile ratio of the titanium dioxide fine particles is calculated by the following formula:

$$\text{Rutile ratio } (\%) = (\text{Hr} / (\text{Hr} + \text{Ha})) \times 100.$$

Hr: Height of maximum peak (at $2\theta = 27.5° \pm 0.5°$) corresponding to rutile-type crystal in X-ray diffraction spectrum.

Ha: Height of maximum peak (at $2\theta = 25.2° \pm 0.5°$) corresponding to anatase-type crystal in X-ray diffraction spectrum.

The titanium dioxide fine particles used in the present invention usually mean that the chemical species thereof are composed of composition of titanium dioxide ($TiO_2$), but may partially include, in addition to titanium dioxide ($TiO_2$), chemical species represented by metatitanate ($TiO_2 \cdot nH_2O$) or orthotitanate ($Ti(OH)_4$).

The titanium dioxide fine particles used in the present invention may further have an inorganic compound on the surfaces thereof.

As the inorganic compound that is present on the surfaces of the titanium dioxide fine particles, a common inorganic compound can be used. Examples thereof include inorganic compounds having, as components, a silicon component (Si), a zirconium component (Zr), a zinc component (Zn), a cobalt component (Co), an iron component (Fe), a niobium component (Nb), a titanium component (Ti), a cerium component (Ce), an aluminum component (Al), an indium component (In) and/or a manganese component (Mn). Examples of states of the above-mentioned inorganic compound include a metal, a metal oxide, and a hydroxide.

Regarding these inorganic compounds, only one thereof may be present on the surfaces of the titanium dioxide fine particles, or two or more thereof may be present on the surfaces of the titanium dioxide fine particles. When two or more of the inorganic compounds are present on the surfaces of the titanium dioxide fine particles, different inorganic compounds may be alternatively present so as to form a layered structure, or may be separately present on the surfaces of the titanium dioxide fine particles.

The above-mentioned inorganic compound that is present on the surfaces of the titanium dioxide fine particles may be a surface-treated material obtained by a known method, or may be a remaining aluminum compound or third component in the case of the fired product of titanium dioxide fine particles.

The coating amount of the above-mentioned inorganic compound in terms of the oxide thereof is, based on the mass of $TiO_2$, preferably 0.3 mass% or more to 15 mass%, more preferably 0.5 mass% or more to 10 mass% or less, and still more preferably 0.7 mass% or more to 5 mass% or less.

The organic solvent dispersion according to the present invention includes an organic solvent. The organic solvent used in the present invention is not particularly limited, and a known organic solvent can be used.

Examples of the organic solvent used in the present invention include ketones and (poly)alkylene glycol monoalkyl ethers. The organic solvent may be a reactive solvent, and may use an acrylate monomer.

Examples of the ketones include methyl ethyl ketone, methyl isobutyl ketone, cyclohexanone, 2-heptanone, 3-heptanone, diacetone alcohol (4-hydroxy-4-methylpentan-2-one), and 4-hydroxy-4-methylhexane-2-one.

Examples of the (poly)alkylene glycol monoalkyl ethers include ethylene glycol monomethyl ether, ethylene glycol monoethyl ether, ethylene glycol mono-n-propyl ether, ethylene glycol mono-n-butyl ether, diethylene glycol monomethyl ether, diethylene glycol monoethyl ether, diethylene glycol mono-n-propyl ether, diethylene glycol mono-n-butyl ether, triethylene glycol monomethyl ether, triethylene glycol monoethyl ether, propylene glycol monomethyl ether, propylene glycol monomethyl ether acetate, propylene glycol monoethyl ether, propylene glycol monoethyl ether acetate, dipropylene glycol monomethyl ether, dipropylene glycol monoethyl ether, dipropylene glycol mono-n-propyl ether, dipropylene glycol mono-n-butyl ether, tripropylene glycol monomethyl ether, and tripropylene glycol monoethyl ether.

Examples of the acrylate monomer include benzyl acrylate, 3-phenoxybenzyl acrylate, 4-phenylbenzyl acrylate, ethoxylated o-phenylphenol acrylate, 1,6-hexanediol diacrylate, and trimethylolpropane acrylate.

By using the above-mentioned organic solvent, the dispersibility of the titanium dioxide fine particles in the organic solvent dispersion according to the present invention is further improved. Moreover, when the above-mentioned organic solvent is used, the compatibility between the organic solvent dispersion and the binder resin is improved in the preparation of a coating composition or a composition for nanoimprinting, so that applicability to the substrate and the like are improved.

The organic solvent dispersion according to the present invention includes a silane coupling agent. In the present application, the term "silane coupling agent" means an organosilicon compound having both an organic functional group "X" and a hydrolyzable group "OR" in one molecule.

In general, the organic functional group "X" is preferably at least one selected from the group consisting of a methacrylic group, an acrylic group, a vinyl group, an epoxy group, an amino group, a mercapto group, a sulfide group, an isocyanate group and the like. When two or more of the organic functional groups "X" are present in the molecule of the silane coupling agent, "X" may be the same or mutually different.

In the hydrolyzable group "OR", "O" represents an oxygen atom, and "R" represents a hydrogen atom or an alkyl group having 1 or more and 22 or less carbon atoms. The above-mentioned alkyl group may be linear, branched, or cyclic. When two or more of the hydrolyzable groups "OR" are present in a molecule of the silane coupling agent, "R" may be the same or mutually different.

Examples of the silane coupling agent used in the present invention include methacryloxy silane, acryloxy silane, vinyl silane, epoxy silane, amino silane, mercapto silane, and isocyanato silane.

Examples of the methacryloxy silane include 3-methacryloxypropylmethyldimethoxysilane, 3-methacryloxypropyltrimethoxysilane, 3-methacryloxypropylmethyldiethoxysilane, 3-methacryloxypropyltriethoxysilane and methacryloxyoctyltrimethoxysilane.

Examples of the acryloxy silane include 3-acryloxypropyltrimethoxysilane.

Examples of the vinyl silane include vinyltrimethoxysilane, vinyltriethoxysilane and octenyltrimethoxysilane.

Examples of the epoxy silane include glycidoxypropyltrimethoxysilane and glycidoxyoctyltrimethoxysilane.

Examples of the amino silane include 3-aminopropyltriethoxysilane, N-phenyl-3-aminopropyltrimethoxysilane, N-2-(aminoethyl)-3-aminopropylmethyldimethoxysilane, N-2-(aminoethyl)-3-aminopropylmethyltrimethoxysilane, and 3-aminopropyltrimethoxysilane.

Examples of the mercapto silane include 3-mercaptopropylmethyldimethoxysilane, and 3-mercaptopropylmethyltrimethoxysilane.

Examples of the isocyanate silane include 3-isocyanatopropyltriethoxysilane.

The organic solvent dispersion according to the present invention includes a dispersant having a basic adsorption group.

The dispersant having a basic adsorption group used in the present invention is preferably an amine-based dispersant having an amino group. Specific examples thereof include primary amines, secondary amines, tertiary amines, or salts thereof, and quaternary ammonium compounds.

These amine-based dispersants include an amino group as a basic adsorption group, or a partial structure in which one or more hydrogen atoms of the amino group are replaced with an alkyl group or the like.

The amine value of the above-mentioned dispersant having a basic adsorption group can be measured using a known method specified in ASTM D2074, JIS K 7237, or the like. A specific method for measuring the amine value will be described below.

The amine value represents the amount of the base per 1 g of the solid content obtained by removing the organic solvent from the dispersant sample in terms of a mass of the equivalent amount of KOH (mgKOH/g).

(Method for Measuring Amine Value)

0.5 to 1.5 g of the dispersant sample is precisely weighed and placed in a 100 mL beaker, and then dissolved in 50 mL of acetic acid. Subsequently, the solution is subjected to neutralization titration with a $HClO_4$ (perchloric acid) acetic acid solution at 0.1 mol/L by means of an automatic titrator equipped with a pH electrode. The inflection point of the titration pH curve is defined as a titration end point, and the amine value is determined from the following equation.

$$\text{Amine value [mgKOH/g]} = (561 \times V) / (W \times S)$$

[where: "V" = Titration volume [mL] at the titration end point, "W" = Weighed amount [g] of a dispersant sample, "S" = Solid content concentration [mass%] of the dispersant sample]

As the dispersant having a basic adsorption group used in the present invention, for example, commercially available products such as DISPERBYK (registered trademark) -163 (manufactured by BYK; amine value: 10 mgKOH/g), Solsperse (registered trademark) 20000 (amine value: 32 mgKOH/g), Solsperse (registered trademark) 39000 (amine value: 25.7 mgKOH/g), and Solsperse (registered trademark) 56000 (amine value: 39 mgKOH/g) (all manufactured by Lubrizol Japan Ltd.), and 2-diethylaminoethyl methacrylate and the like can be used.

When the dispersant having a basic adsorption group used in the present invention has an amine value of more than 5 mgKOH/g, the dispersant can be regarded as having sufficiently high basicity, so that a desired dispersion effect can be achieved by the organic solvent dispersion according to the present invention.

In the organic solvent dispersion according to the present invention, the mass ratio of the dispersant having a basic adsorption group to the silane coupling agent is 15 mass% or more and 75 mass% or less, more preferably 15 mass% or more and 70 mass% or less, and still more preferably 20 mass% or more and 70 mass% or less.

In the organic solvent dispersion according to the present invention, the silane coupling agent is understood to function as a dispersing aid that facilitates the deagglomeration of the titanium dioxide fine particles in an agglomerated state.

The dispersant having a basic adsorption group is understood to reduce reagglomeration of deagglomerated titanium dioxide fine particles in the organic solvent.

In the organic solvent dispersion according to the present invention, a dispersant having a basic adsorption group and a silane coupling agent are used in combination, thereby reliably protecting the surfaces of titanium dioxide fine particles, and achieving dispersion stabilization thereof.

Thus, the mass ratio of the dispersant having a basic adsorption group to the silane coupling agent is preferably 15 mass% or more and 75 mass% or less. The reason why setting the mass ratio of the dispersant having a basic adsorption group to the silane coupling agent to be 75 mass% or less is preferred is because the content of the silane coupling agent is reduced, thereby avoiding an adverse effect of impairing its function, namely, the function of facilitating, by means of wet dispersion or the like, the deagglomeration of titanium dioxide fine particles that are in an agglomerated state in an organic solvent. The reason why setting the mass ratio of the dispersant having a basic adsorption group to the silane coupling agent to be 15 mass% or more is preferred is because the content of the dispersant is reduced, thereby avoiding that its function cannot be sufficiently exerted.

The organic solvent dispersion according to the present invention can be produced by dispersing, in an organic solvent, titanium dioxide fine particles in which a titanium component, a tin component and an aluminum component are detected by means of X-ray fluorescence measurement, and an X-ray diffraction peak derived from rutile-type titanium dioxide (or only an X-ray diffraction peak derived from rutile-type titanium dioxide) is observed and X-ray diffraction peaks derived from a tin component and an aluminum component are not observed by means of powder X-ray diffraction measurement, a silane coupling agent, and a dispersant having a basic adsorption group.

In the dispersion of the above-mentioned organic solvent dispersion, a dispersion aid, a dispersion stabilizer, a defoamer, a thickener, inorganic oxide fine particles other than titanium dioxide fine particles, and the like may be added, in addition to the above-mentioned silane coupling agent and the above-mentioned dispersant having a basic adsorption group.

In the above-mentioned dispersion, known dispersers can be used. For example, a paint shaker, a dissolver, a high-speed stirrer, a kneader, an ultrasonic disperser, a high-pressure homogenizer, a ball mill, a bead mill, a sand mill, a horizontal media mill disperser, a colloid mill, or the like can be used.

The dispersion time in the above-mentioned dispersion may be appropriately adjusted depending on the type of disperser used or the type of medium used.

Among the above-mentioned dispersers, a bead mill is preferably used to obtain an organic solvent dispersion having high dispersibility. Also, it is preferred to use a bead medium when using a bead mill for dispersion. The diameter of the above-mentioned bead medium is preferably 1 mm or less, and more preferably 0.5 mm or less.

Also, the material of the above-mentioned bead medium is preferably ceramic. By using ceramic, coloration of the dispersion and introduction of impurities (i.e., contamination) derived from the bead medium can be avoided. Examples of the above-mentioned ceramic include zirconia, alumina, and zircon.

The above-mentioned dispersion may be performed only once, or two or more times. When the above-mentioned dispersion is performed two or more times, it is preferred, for example, to divide the dispersion into a preliminary dispersion and a main dispersion.

By performing the preliminary dispersion, the surfaces of the titanium dioxide fine particles in the organic solvent dispersion can be wetted, so that air layers on the surfaces of the titanium dioxide fine particles are replaced with the organic solvent. Subsequently, by performing the main dispersion, the titanium dioxide fine particles in the organic solvent dispersion can be rapidly dispersed. As a result, the dispersibility of the titanium dioxide fine particles in the organic solvent can be effectively improved, and the dispersion treatment time taken until the dispersed particles have a desired size can be reduced.

In the dispersion conditions in the above-mentioned preliminary dispersion and the above-mentioned main dispersion, the same disperser and dispersion conditions may be adopted, or different dispersers and dispersion conditions may be adopted. The bead medium used in the main dispersion is more preferably a bead medium that is smaller in diameter than that used in the preliminary dispersion. In this way, the dispersibility of the titanium dioxide fine particles in the organic solvent can be further enhanced.

Preferably, the above-mentioned dispersion is followed by removal of agglomerated titanium dioxide fine particles included in the organic solvent dispersion by means of centrifugation.

The above-mentioned centrifugation conditions are preferably set to be 2,400G or more and 30 minutes or more. In this way, the agglomerated titanium dioxide fine particles included in the organic solvent dispersion can be sufficiently removed, and the transparency of the organic solvent dispersion can be improved.

The titanium dioxide fine particles in which a titanium component, a tin component and an aluminum component are detected by means of the above-mentioned X-ray fluorescence measurement, and an X-ray diffraction peak derived from rutile-type titanium dioxide (or only an X-ray diffraction peak derived from rutile-type titanium dioxide) is observed and X-ray diffraction peaks derived from a tin component and an aluminum component are not observed by means of powder X-ray diffraction measurement can be produced by including, for example, the following steps.

A method for producing the organic solvent dispersion according to the present invention includes the following steps: Step (1): a step of hydrolyzing a mixture of titanium (oxy)chloride and a tin compound, or a step of hydrolyzing titanium (oxy)chloride in the presence of core particles of a tin compound (e.g., core particles obtained by hydrolyzing a tin compound); Step (2): a step of mixing a product obtained by the above-mentioned hydrolysis in Step (1) and an aluminum compound; and Step (3): a step of performing a treatment including firing the mixture of the product obtained by the above-mentioned hydrolysis in Step (1) and the aluminum compound at a temperature of 250°C or higher and 1,000°C or lower.

As a result, titanium dioxide fine particles in which a titanium component, a tin component and an aluminum component are detected by means of X-ray fluorescence measurement, and an X-ray diffraction peak derived from rutile-type titanium dioxide is observed (or only an X-ray diffraction peak derived from rutile-type titanium dioxide) and X-ray diffraction peaks derived from a tin component and an aluminum component are not observed by means of powder X-ray diffraction measurement can be obtained.

Also, preferably, titanium dioxide fine particles in which a tin component and an aluminum component are present as a solid solution can be obtained.

In the titanium dioxide fine particles in which a tin component and an aluminum component are present as a solid solution, it is preferred to use, as a method for incorporating the tin component and the aluminum component into titanium dioxide fine particles by solid solution, a liquid-phase method or a solid-phase method as described below, and it is more preferred to use a co-precipitation method as the liquid-phase method and a high-temperature firing method as the solid-phase method.

Still more preferred is a method in which the tin component is incorporated into the titanium dioxide fine particles by solid solution using the liquid-phase method and the aluminum component is incorporated into the titanium dioxide fine particles by solid solution using the solid-phase method. Most preferred is a method in which the tin component is incorporated into the titanium dioxide fine particles by solid solution using the co-precipitation method, and the aluminum component is incorporated into the titanium dioxide fine particles by solid solution using the high-temperature firing method.

Also, in the titanium dioxide fine particles in which a tin component, an aluminum component and a third component are present as a solid solution, for example, a method may be used in which the tin component is incorporated into the titanium dioxide fine particles by solid solution using the liquid-phase method and the aluminum component and the third component are incorporated by solid solution using the solid-phase method as a method in which the tin component, the aluminum component and the third component are incorporated into the titanium dioxide fine particles by solid solution.

More preferred is a method in which the tin component is incorporated into the titanium dioxide fine particles by solid solution using the co-precipitation method and the aluminum component and the third component are incorporated into the titanium dioxide fine particles by solid solution using the solid-phase method. Still more preferred is a method in which the tin component is incorporated into the titanium dioxide fine particles by solid solution using the co-precipitation method and the aluminum component and the third component are incorporated into the titanium dioxide fine particles by solid solution using the high-temperature firing method.

<Step (1)>

Step (1) in the present application is a step of hydrolyzing a mixture of titanium (oxy)chloride and a tin compound, or a step of hydrolyzing titanium (oxy)chloride in the presence of core particles obtained by hydrolyzing the tin compound. Through this step, a hydrolysis product including the tin component and the titanium component is obtained. Inclusion of the tin component during production of the titanium dioxide fine particles is preferred because the formation of rutile-type titanium dioxide is facilitated. First, the method for hydrolyzing a mixture of titanium (oxy)chloride and a tin compound, which is one method in Step (1), will be described.

As the above-mentioned titanium (oxy)chloride, titanium tetrachloride, titanium trichloride, titanium oxychloride, and the like can be used. Among them, the titanium tetrachloride is preferred. The above-mentioned titanium (oxy)chloride may be used in the form of a solution dissolved in water or the like. The term "titanium (oxy)chloride" means titanium chloride and/or titanium oxychloride.

The concentration of the above-mentioned titanium (oxy)chloride is preferably 45 g/L or more and 250 g/L or less, more preferably 100 g/L or more and 250 g/L or less, and still more preferably 150 g/L or more and 250 g/L or less in terms of $TiO_2$. When the concentration thereof is 45 g/L or more, a sufficient production amount of the titanium dioxide fine particles used in the present invention can be secured. When the concentration thereof is 250 g or less, excessive hydrolysis of titanium (oxy)chloride can be preferably reduced, and the titanium dioxide fine particles used in the present invention can be preferably and safely produced.

As the above-mentioned tin compound, tin (II) chloride, tin (IV) chloride, tin sulfate, tin nitrate, tin acetate, tin oxychloride, and the like can be used. Among them, tin (IV) chloride is preferred. As the above-mentioned tin compound, a solution of the tin compound dissolved in a solvent such as water may be used. Tin (IV) chloride and tin tetrachloride (that is, $SnCl_4$) means to be the same compound.

As the above-mentioned tin compound, a mixture of the tin compound and a known acid may be used. As the above-mentioned acid, for example, hydrochloric acid, sulfuric acid, or nitric acid can be used, and an aqueous solution of the above-mentioned acid may be used. The order of mixing of the above-mentioned tin compound and the above-mentioned acid is not limited. The above-mentioned acid may be mixed with the above-mentioned tin compound, the above-mentioned tin compound may be mixed with the above-mentioned acid, or the above-mentioned acid and the above-mentioned tin compound may be mixed at the same time.

The concentration of the above-mentioned tin compound in the above-mentioned acid is not particularly limited, and is preferably 0.1 g/L or more and 15 g/L or less, and more preferably 2 g/L or more and 7 g/L or less in terms of the oxide (i.e., $SnO_2$). For example, the concentration of tin chloride in the hydrochloric acid aqueous solution described below is not particularly limited. For example, the concentration of tin chloride is preferably 0.1 g/L or more and 15 g/L or less, and more preferably 2 g/L or more and 7 g/L or less in terms of the oxide (i.e., $SnO_2$). When the concentration of the tin compound (e.g., tin chloride) is in the above-mentioned range, the hydrolysis and precipitation of the tin compound (e.g., tin chloride) alone can be avoided.

The concentration of the above-mentioned acid is not particularly limited. For example, when a hydrochloric acid aqueous solution is used as the acid, the concentration of hydrochloric acid is preferably 1 g/L or more and 15 g/L or less, and more preferably 3 g/L or more and 10 g/L or less. When the concentration of the above-mentioned hydrochloric acid is in the above-mentioned range, the hydrolysis and precipitation of the tin compound (e.g., tin chloride) alone can be avoided.

By hydrolyzing the mixture of the above-mentioned tin compound (e.g., tin chloride) and titanium (oxy)chloride, a hydrolysis product including the tin component and the titanium component is obtained.

In mixing the above-mentioned tin compound and the above-mentioned titanium (oxy)chloride, their mixing order is not particularly limited. The above-mentioned titanium (oxy)chloride (or an aqueous solution of titanium (oxy)chloride) may be mixed with the above-mentioned tin compound (or an aqueous solution of the tin compound), the above-mentioned tin compound may be mixed with the above-mentioned titanium (oxy)chloride, or the above-mentioned tin compound and the above-mentioned titanium (oxy)chloride may be mixed at the same time.

The above-mentioned tin compound (e.g., tin chloride) is preferably mixed such that the oxide equivalent mass ratio of the amount of this tin component in terms of the amount of the oxide of $SnO_2$ (i.e., the amount of $SnO_2$) to the titanium component of the above-mentioned titanium (oxy)chloride in terms of the amount of the oxide of $TiO_2$ (i.e., the amount of $TiO_2$) (i.e., amount of $SnO_2$/amount of $TiO_2$) is 0.1 mass% or more and 20 mass% or less, and preferably 2 mass% or more and 7 mass% or less.

In the above-mentioned hydrolysis method, a mixture of the tin compound (e.g., tin chloride) and titanium (oxy) chloride is preferably heated to perform hydrolysis. The temperature at which the above-mentioned mixture is heated is preferably 40°C or higher and 110°C or lower, more preferably 50°C or higher and 110°C or lower, still more preferably 60°C or higher and 110°C or lower.

In heating the mixture of the above-mentioned tin compound and the above-mentioned titanium (oxy)chloride, the tin compound (or titanium (oxy)chloride) may be heated to a predetermined temperature, followed by mixing titanium (oxy)chloride (or the tin compound), or the tin compound and titanium (oxy)chloride may be mixed, followed by heating of the mixture to a predetermined temperature. In particular, it is preferred to heat the tin compound to a predetermined temperature in advance, followed by mixing of titanium (oxy)chloride therewith.

This allows for the tin component and the titanium component to be hydrolyzed substantially at the same time, and co-precipitated. The time of hydrolysis can be appropriately set.

As another method of Step (1), titanium (oxy)chloride is hydrolyzed in the presence of core particles of the tin compound (e.g., core particles obtained by hydrolyzing the above-mentioned tin compound) to obtain a hydrolysis product including the tin component and the titanium component. Inclusion of the tin component during production of the titanium dioxide fine particles is preferred because the formation of rutile-type titanium dioxide is facilitated.

As the above-mentioned core particles, a commercially available product or an on-site synthesized product may be used. Examples of the method for on-site synthesis include a method in which an acidic aqueous solution of a tin compound is heated. For example, by preparing a hydrochloric acid aqueous solution of tin chloride (e.g., $SnCl_4$), which is heated at a temperature of 40°C or higher and 80°C or lower, fine particles of the tin compound which form core particles can be obtained. As the tin compound and the acid, those mentioned above can be used.

The concentration of the tin compound (e.g., tin chloride) in the above-mentioned hydrochloric acid aqueous solution is not particularly limited. For example, the concentration of tin compound (e.g., tin chloride) is preferably 0.1 g/L or more and 15 g/L or less, and more preferably 2 g/L or more and 7 g/L or less in terms of the oxide (i.e., $SnO_2$).

The concentration of hydrochloric acid is not particularly limited. For example, the concentration of hydrochloric acid is preferably 1 g/L or more and 15 g/L or less, and more preferably 3 g/L or more and 10 g/L or less.

By hydrolyzing titanium (oxy)chloride in the presence of core particles, a hydrolysis product including the tin component and the titanium component is obtained. As the titanium (oxy)chloride, those mentioned above can be used. When the titanium (oxy)chloride aqueous solution is used, the concentration thereof is preferably in the above-mentioned range.

In the above-mentioned hydrolysis method, titanium (oxy)chloride is preferably heated in the presence of core particles to perform hydrolysis. The temperature at which the above-mentioned mixture is heated is preferably 40°C or higher and 110°C or lower, and more preferably 50°C or higher and 110°C or lower.

This allows for the titanium (oxy)chloride to be sufficiently hydrolyzed using the fine particles of the tin compound as cores. The time of hydrolysis can be appropriately set.

The above-mentioned steps, namely, the step of hydrolyzing the mixture of titanium (oxy)chloride and the tin compound, the step of hydrolyzing the tin compound, and the step of hydrolyzing titanium (oxy)chloride in the presence of core particles may be performed while stirring by means of a known stirrer such as a blade-type stirrer, a disperser or a homomixer.

Further, the hydrolysis product may be aged after the above-mentioned hydrolysis reaction.

The conditions of the above-mentioned aging step are not particularly limited. Specifically, it is preferred to perform aging for 1 minute or more and 48 hours or less while maintaining the temperature of the hydrolysis reaction (e.g., neutralization reaction). The aging time is more preferably 5 minutes or more and 24 hours or less, and still more preferably 10 minutes or more and 12 hours or less.

A step of adjusting the pH may be provided after the above-mentioned aging step. The above-mentioned pH is preferably 5 or more and 9 or less, and more preferably 6 or more and 8 or less. In this way, unintended hydrolysis in the subsequent steps can be reduced. An acid or an alkali may be selectively used depending on the pH before adjustment. Examples of the acid include sulfuric acid, hydrochloric acid, and nitric acid. Examples of the alkali include sodium hydroxide, potassium hydroxide, and ammonia.

In the above-mentioned Step (1), a carboxylic acid or a salt thereof may be mixed during the hydrolysis of the above-mentioned titanium (oxy)chloride.

The specific step includes a step of hydrolyzing the mixture of the above-mentioned titanium (oxy)chloride, the tin compound and the carboxylic acid or a salt thereof, or a step of adding the above-mentioned titanium (oxy)chloride and the carboxylic acid or a salt thereof in the presence of the core particles of the tin compound (e.g., core particles obtained by hydrolyzing the tin compound) to hydrolyze the mixture.

The above-mentioned carboxylic acid or a salt thereof is preferably mixed at 0.3 mol% or more and 3 mol% or less, and more preferably at 0.5 mol% or more and 2 mol% or less with respect to 1 mol of the titanium component of titanium (oxy)chloride in terms of the amount of the oxide of $TiO_2$.

The titanium dioxide fine particles obtained by the production method using the above-mentioned carboxylic acid or a salt thereof can reduce the agglomeration of the titanium dioxide fine particles by the subsequent drying step and the sintering of the titanium dioxide fine particles by the subsequent firing step. As a result, the titanium dioxide fine particles can be dispersed in the organic solvent without the need for a grinding step, and an organic solvent dispersion having high transparency can be obtained.

The order of mixing of the above-mentioned titanium (oxy)chloride, the tin compound and the carboxylic acid or a salt thereof is not particularly limited. The titanium (oxy)chloride and the carboxylic acid or a salt thereof may be mixed, followed by mixing with the tin compound; the titanium (oxy)chloride, the tin compound and the carboxylic acid or a salt thereof may be mixed at the same time; or the tin compound and the carboxylic acid or a salt thereof may be mixed, followed by mixing with the titanium (oxy)chloride.

Among them, it is preferred to mix the titanium (oxy)chloride and the carboxylic acid or a salt thereof in advance, and then add the mixture to the tin compound.

The above-mentioned carboxylic acid or a salt thereof includes monocarboxylic acids, poly (i.e., polyvalent) carboxylic acids, and salts thereof, and examples thereof include the following (a) to (g):

(a) carboxylic acids: for example, formic acid, acetic acid and propionic acid;
(b) poly (i.e., polyvalent) carboxylic acids: in particular, dicarboxylic acids and tricarboxylic acids, for example, oxalic acid and fumaric acid;
(c) hydroxy poly (i.e., polyvalent) carboxylic acids: in particular, hydroxycarboxylic acids and hydroxytricarboxylic acids, for example, malic acid, citric acid and tartronic acid;
(d) polyhydroxymonocarboxylic acids: for example, glucoheptonic acid and gluconic acid;
(e) poly (polyvalent)-hydroxycarboxylic acids: for example, tartaric acid;
(f) dicarboxylic amino acids and their corresponding amides: for example, aspartic acid and asparagine (2-amino-3-carbamoylpropionic acid), glutamic acid; and
(g) monocarboxylic amino acids that are hydroxylated or are not hydroxylated: for example, lysine, serine, and threonine.

The above-mentioned carboxylic acid is preferably a hydroxy poly (i.e., polyvalent) carboxylic acid, and more preferably citric acid. As the salt of a carboxylic acid, any salt can be used without limitation. For example, salts of alkali metals such as sodium or potassium, and ammonium salts can be used.

<Step (2)>

Step (2) in the present application is a step of mixing the above-mentioned hydrolysis product including the tin component and the titanium component and an aluminum compound. This allows for the aluminum component to be diffused into the above-mentioned hydrolysis product by firing in Step (3) that is the subsequent step, so that the titanium dioxide fine particles in which the titanium component, the tin component and the aluminum component are detected by means of X-ray fluorescence measurement, and an X-ray diffraction peak derived from rutile-type titanium dioxide is observed and X-ray diffraction peaks derived from the tin component and the aluminum component are not observed by means of powder X-ray diffraction measurement.

The mixing state is not particularly limited, and any mixing state may be set using a known mixing method. For example, the particles of the hydrolysis product and the particles of the aluminum compound may be homogeneously mixed, or the aluminum compound may be present on the surfaces of the particles of the hydrolysis product. The latter case may be, for example, a state in which the particles of the aluminum compound are attached to the surfaces of the particles of the hydrolysis product, or a state in which the surfaces of the particles of the hydrolysis product are coated with the aluminum compound layer. It is particularly preferred that the aluminum compound is present on the surfaces of the particles of the hydrolysis product, and in particular, it is more preferred that the surfaces of the particles of the hydrolysis product are coated with the aluminum compound layer.

In the above-mentioned mixing step, the order thereof is not particularly limited. The above-mentioned aluminum compound may be added to and mixed with the above-mentioned hydrolysis product, the above-mentioned hydrolysis product may be added to and mixed with the above-mentioned aluminum compound, or the above-mentioned hydrolysis product and the above-mentioned aluminum compound may be mixed at the same time. In particular, it is preferred that the above-mentioned aluminum compound is added to and mixed with the above-mentioned hydrolysis product. This allows for the aluminum compound to be present on the surface of the above-mentioned hydrolysis product.

In mixing of the above-mentioned hydrolysis product and the aluminum compound, one or more compounds selected from the group consisting of a silicon compound, a cobalt compound and a manganese compound may be further mixed.

When one or more compounds selected from the group consisting of a silicon compound, a cobalt compound and a manganese compound are mixed, the mixing may be performed in the same manner as that for mixing the above-mentioned hydrolysis product and the aluminum compound.

The above-mentioned phrase "... present on the surface" means that the entire surface of the above-mentioned hydrolysis product may be coated, or an island shape may be formed to coat only one part of the surface of the above-mentioned hydrolysis product. Preferably, the entire surface of the above-mentioned hydrolysis product is coated.

Specific examples of the method for coating the surface of the above-mentioned hydrolysis product with the aluminum compound component include a method in which in mixing of the above-mentioned hydrolysis product and the aluminum compound, an acid or an alkali is mixed, so that a hydroxide of aluminum is precipitated on the surface of the above-mentioned hydrolysis product by a neutralization reaction.

Examples of the above-mentioned aluminum compound include aluminum halides such as aluminum chloride, compounds of aluminum and an inorganic acid such as aluminum chloride, aluminum nitrate and aluminum sulfate, and oxo acid metal salts of aluminum such as sodium aluminate. These aluminum compounds may be used alone, or two or more of the aluminum compounds may be used in combination. The above-mentioned aluminum compound may be used in the form of powder, or may be used in the form of a solution dissolved in a solvent such as water.

Examples of the above-mentioned silicon compound include silicates such as sodium silicate and potassium silicate. The above-mentioned silicon compound may be used in the form of powder, or may be used in the form of a solution in a solvent such as water.

Examples of the above-mentioned cobalt compound include cobalt (II) chloride, cobalt (III) chloride, cobalt (II) sulfide, cobalt (II) sulfate, cobalt (II) nitrate, cobalt (II) carbonate, and cobalt (II) acetate. As the above-mentioned cobalt compound, a hydrate may be used. Further, the above-mentioned cobalt compound may be used in the form of powder, or may be dissolved in a solvent such as water, and used in the form of a solution.

Examples of the above-mentioned manganese compound include manganese (II) chloride, manganese (II) sulfide, manganese (II) sulfate, manganese (II) nitrate, manganese (II) phosphate, manganese (II) carbonate, and manganese (II) acetate. As the above-mentioned manganese compound, a hydrate may be used. Further, the above-mentioned cobalt compound may be used in the form of powder, or may be in the form of a solution dissolved in a solvent such as water.

The above-mentioned aluminum compound is preferably mixed such that the oxide equivalent mass ratio of the amount of the aluminum component in terms of the amount of its oxide ($Al_2O_3$) (i.e., the amount of $Al_2O_3$) to the amount of the titanium component in terms of its oxide ($TiO_2$) (i.e., the amount of $TiO_2$) in the hydrolysis product (i.e., the amount of $Al_2O_3$ / the amount of $TiO_2$) is the ratio of 0.5 mass% or more and 10 mass% or less, and preferably 2 mass% or more and 8 mass% or less.

The above-mentioned silicone compound is preferably mixed such that the oxide equivalent mass ratio of the amount of the silicon component in terms of its oxide ($SiO_2$) (i.e., the amount of $SiO_2$) to the amount of the titanium component in terms of its oxide ($TiO_2$) (i.e., the amount of $TiO_2$) in the hydrolysis product (i.e., the amount of $SiO_2$/ the amount of $TiO_2$) is the ratio of 0.5 mass% or more and 10 mass% or less, and preferably 1 mass% or more and 5 mass% or less.

The above-mentioned cobalt compound is preferably mixed such that the oxide equivalent mass ratio of the amount of the cobalt component in terms of its oxide ($Co_2O_3$) (i.e., the amount of $Co_2O_3$) to the amount of the titanium component in terms of its oxide ($TiO_2$) (i.e., the amount of $TiO_2$) in the hydrolysis product (i.e., the amount of $Co_2O_3$ / the amount of $TiO_2$) is the ratio of 0.05 mass% or more and 5 mass% or less, and preferably 0.07 mass% or more and 3 mass% or less.

The above-mentioned manganese compound is preferably mixed such that the oxide equivalent mass ratio of the manganese component in terms of its oxide (MnO) (i.e., the amount of MnO) to the amount of the titanium component in terms of its oxide ($TiO_2$) (i.e., the amount of $TiO_2$) in the hydrolysis product (i.e., the amount of MnO / the amount of $TiO_2$) is the ratio of 0.05 mass% or more and 5 mass% or less, and preferably 0.07 mass% or more and 3 mass% or less.

Examples of the above-mentioned acid include inorganic acids such as sulfuric acid, hydrochloric acid, and nitric acid, and these acids may be used alone, or two or more of the acids may be used in combination. Examples of the above-mentioned alkali include hydroxides of alkali metals such as sodium hydroxide and potassium hydroxide, carbonates of alkali metals such as sodium carbonate and potassium carbonate, and inorganic bases such as ammonia, and these alkalis may be used alone, or two or more of the alkalis may be used in combination.

Whether the acid or the alkali is used may be appropriately selected depending on the aluminum compound to be mixed. For example, when alkaline sodium aluminate is used as the aluminum compound, the acid may be used.

In the above-mentioned neutralization reaction, the order of mixing of the hydrolysis product, the aluminum compound and the acid or the alkali is not particularly limited.

For example, the aluminum compound may be added to the hydrolysis product, followed by addition of the acid or the alkali, the acid or the alkali may be added to the hydrolysis product, followed by addition of the aluminum compound, or the aluminum compound and the acid or the alkali may be added to the hydrolysis product at the same time.

Among these, it is preferred that the aluminum compound is added to the hydrolysis product, followed by addition of an acid or alkali.

The pH in the above-mentioned neutralization reaction is preferably 4 or more and 7 or less, and more preferably 5 or more and 6 or less. When the pH in the above-mentioned neutralization reaction is in this range, the aluminum compound can be sufficiently precipitated as a hydroxide, and the surface of the hydrolysis product can be uniformly coated with the hydroxide of aluminum.

The pH in the neutralization reaction can be adjusted by the amount of the acid or the alkali to be added during the reaction.

The above-mentioned reaction temperature in the neutralization reaction is preferably 40°C or higher and 90°C or lower, and more preferably 55°C or higher and 80°C or lower. When the reaction temperature in the above-mentioned neutralization reaction is in this range, the surface of the hydrolysis product can be uniformly coated with the hydroxide of aluminum.

The above-mentioned neutralization reaction may be performed with stirring using a known stirrer such as a blade-type stirrer, a disperser or a homomixer.

Further, the hydrolysis product coated with the aluminum hydroxide may be aged after the above-mentioned neutralization.

The conditions of the above-mentioned aging step are not particularly limited. Specifically, it is preferred to perform aging for 1 minute or more and 48 hours or less while maintaining the temperature of the neutralization reaction. The aging time is more preferably 5 minutes or more and 24 hours or less, and still more preferably 10 minutes or more and 12 hours or less.

Solid-liquid separation of the hydrolysis product coated with the aluminum hydroxide obtained by the above-mentioned neutralization reaction may be performed using a known method as necessary, and the solid content thereof may be dried to obtain powder.

Even when one or more compounds selected from the group consisting of a silicon compound, a cobalt compound and a manganese compound are used, a series of steps from the above-mentioned step of selecting the acid or the alkali used to the step of optionally performing the above-mentioned solid-liquid separation and drying the solid content may be performed in the same manner as the above-mentioned series of steps for the aluminum compound.

Regarding the above-mentioned solid-liquid separation, a known filtration method can be used. For example, a pressure filtration apparatus used in industry, such as a rotary press or a filter press, and a vacuum filtration apparatus such as a Nutsche filter or a Moore filter can be used.

In the operation of the above-mentioned solid-liquid separation, washing may be performed using pure water, various organic solvents or the like as necessary. Among these, it is preferred to wash the filtrate with pure water using a filter press or a Nutsche filter until the electrical conductivity of the filtrate becomes 1,500 $\Omega \cdot cm$ or more.

The conditions of the above-mentioned drying are not particularly limited. For example, the drying temperature is preferably 100°C or higher and 250°C or lower, more preferably 120°C or higher and 220°C or lower, and still more preferably 140°C or higher and 180°C or lower. The drying time is preferably 30 minutes or more and 72 hours or less, more preferably 1 hour or more and 48 hours or less, and still more preferably 6 hours or more and 24 hours or less.

<Step (3)>

Step (3) in the present application is a step of firing the mixture of the product obtained by the above-mentioned hydrolysis and the aluminum compound at a temperature of 250°C or higher and 1,000°C or lower.

The temperature in the above-mentioned firing is preferably 300°C or higher and 800°C or lower, more preferably 350°C or higher and 750°C or lower, and still more preferably 420°C or higher and 720°C or lower.

The firing time and the firing atmosphere can be appropriately set. Specifically, the firing time is preferably 30 minutes or more and 24 hours or less, and more preferably 1 hour or more and 18 hours or less. The firing atmosphere is preferably an air atmosphere.

Regarding the firing conditions when one or more compounds selected from the group consisting of a silicon compound, a cobalt compound and a manganese compound are included in addition to the product obtained by the above-mentioned hydrolysis and the aluminum compound, the same firing conditions as mentioned above may be used.

The sample obtained after the above-mentioned firing may be ground by a known method without being limited to dry grinding or wet grinding. As examples of a grinding machine, a paint shaker, a dissolver, a high-speed stirrer, an ultrasonic disperser, a high-pressure homogenizer, a bead mill, a sand mill, a horizontal media mill disperser, a colloid mill, a grinder, a hammer mill, a jet mill, or an attritor mill or the like can be used.

As an example of the above-mentioned grinding step, wet grinding may be performed as follows.

The sample obtained after firing is mixed with pure water to prepare a slurry. The concentration of the above-mentioned slurry is not particularly limited, but is preferably 100 g/L or more and 300 g/L or less. A concentration of 100 g/L or more is preferred because the yield can be increased, and a concentration of 300 g/L or less is preferred because the thickening of the above-mentioned slurry can be efficiently reduced. A known dispersant may be added or a pH adjuster may be added to adjust the pH for improving the dispersibility of the slurry.

As a guideline for the above-mentioned grinding step, it is preferred to grind until the volume-based cumulative 90% particle diameter (i.e., Laser Diffraction: LD90) of the above-mentioned slurry measured using a laser diffraction/-scattering method is 3.5 $\mu$m or less.

In this way, the particle size distribution of the titanium dioxide fine particles in the organic solvent dispersion can be set to a preferred range. The above-mentioned grinding step may be performed only once or two or more times. The measurement conditions for the above-mentioned laser diffraction/scattering method are as follows.

○ Measurement conditions:

Measurement apparatus: LA-950 manufactured by HORIBA, Ltd.
Conditions:

(1) Particle refractive index: 2.75;
(2) Solvent refractive index: 1.333;
(3) Circulation speed: 5;
(4) Ultrasonic intensity: 5;
(5) Ultrasonication time: 3 min;
(6) Stirring intensity: 5; and
(7) Measurement solvent: solvent obtained by adjusting 0.3% aqueous solution of sodium hexametaphosphate to a pH of 10 with NaOH.

After the above-mentioned slurry is subjected to wet grinding, solid-liquid separation may be performed, as necessary, using a known method, and the solid content thereof may be dried to obtain powder. Regarding the above-mentioned solid-liquid separation, a known filtration method can be used. For example, a pressure filtration apparatus used in industry, such as a rotary press or a filter press, and a vacuum filtration apparatus such as a Nutsche filter or a Moore filter can be used.

In the operation of the above-mentioned solid-liquid separation, washing may be performed using pure water, various organic solvents or the like as necessary. Among these, it is preferred to wash the filtrate with pure water using a filter press or a Nutsche filter until the electrical conductivity of the filtrate is 1,500 $\Omega$·cm or more.

The conditions of the above-mentioned drying are not particularly limited. For example, the drying temperature is preferably 100°C or higher and 250°C or lower, more preferably 120°C or higher and 220°C or lower, and still more preferably 140°C or higher and 180°C or lower.

The drying time is preferably 30 minutes or more and 72 hours or less, more preferably 1 hour or more and 48 hours or less, and still more preferably 6 hours or more and 24 hours or less.

In the above-mentioned titanium dioxide fine particles, the tin component and the aluminum component are preferably incorporated into the fine particles by solid solution. The method for incorporating the tin component and the aluminum component into the titanium dioxide fine particles by solid solution is not particularly limited.

As the method for incorporating the tin component and the aluminum component into the titanium dioxide fine particles by solid solution, a known method such as a gas phase method (e.g., a chemical vapor deposition (CVD) method or a physical vapor deposition (PVD) method), a liquid phase method (e.g., a hydrothermal method, a sol-gel method or a co-precipitation method), or a solid phase method (a high-temperature firing method) can be used.

Among these, in the titanium dioxide fine particles in which the tin component and the aluminum component are present as solid solution, the above-mentioned liquid phase method or solid phase method is preferably used as a method for incorporating the tin component and the aluminum component into the titanium dioxide fine particles by solid solution, and it is more preferred to use a co-precipitation method as the liquid phase method and a high-temperature firing method as the solid phase method.

Still more preferred is a method in which the tin component is present as solid solution using the liquid phase method and the aluminum component is present as solid solution using the solid phase method. Most preferred is a method in which the tin component is present as solid solution using the co-precipitation method and the aluminum component is present as solid solution using the high-temperature firing method.

After the above-mentioned firing step (i.e., Step (3)), the surfaces of the resulting titanium dioxide fine particles may be further coated with an inorganic compound.

As a method for coating the surfaces of the titanium dioxide fine particles with an inorganic compound after the above-mentioned firing step, a known surface treatment method can be used. Specifically, it is preferred that a slurry including the fired titanium dioxide fine particles is adjusted, and an inorganic compound is added to the slurry to coat the surfaces thereof, and it is more preferred that the inorganic compound is neutralized in a slurry including the fired titanium dioxide fine particles, so that the inorganic compound is precipitated on the surfaces of the titanium dioxide fine particles to coat the surfaces thereof. The mixing of the powder of the titanium dioxide fine particles and the inorganic compound may be performed in a dry process to coat the surfaces of the fine particles with the inorganic compound.

The coating composition according to the present invention includes the above-mentioned organic solvent dispersion of the titanium dioxide fine particles, and a binder resin.

Since the organic solvent dispersion according to the present invention has a high transmittance, a paint film having high visible light transmittance (transparency) can be formed by using the coating composition with the organic solvent dispersion. Also, since the refractive index of the titanium dioxide fine particles is high, a paint film having a high refractive index can be formed by using the coating composition including the fine particles.

The binder resin used in the coating composition is not particularly limited, provided that the stability, the high refractive index, and the visible light transmittance (transparency) of the paint film obtained from the coating composition are secured.

As the binder resin, for example, alkyd-based resins, acrylic-based resins, melamine-based resins, urethane-based resins, epoxy-based resins, silicone-based resins, polyester-based resins, polyamide acid-based resins, polyimide-based resins, styrene-maleic acid-based resins, and styrene maleic anhydride-based resins can also be used.

Examples of preferred binder resins include urethane-based resins, acrylic-based resins, polyamide acid-based resins, polyimide-based resins, styrene-maleic acid-based resins, and styrene-maleic anhydride-based resins.

The binder resins may be used alone, or used in combination of two or more thereof. Further, various acrylic acid-based monomers and acrylate-based monomers can also be applied.

The coating composition according to the present invention may include various additives in addition to the organic solvent dispersion of the titanium dioxide fine particles and the binder resin. Specifically, a dispersant, a pigment, a filler, an aggregate, a thickener, a flow control agent, a leveling agent, a curing agent, a crosslinking agent, a curing catalyst, a curing polymerization initiator, and the like can be blended.

The coating composition according to the present invention can be prepared by mixing the above-mentioned organic solvent dispersion of the titanium dioxide fine particles and the binder resin, together with the additives as necessary. In the mixing step, for example, it is preferred to use the above-mentioned dissolver or high-speed stirrer.

The organic solvent dispersion or the coating composition according to the present invention can form a paint film. Specifically, by applying the organic solvent dispersion or the coating composition according to the present invention to a substrate by any method, and drying and/or firing as necessary, a paint film can be formed on the substrate.

The substrate is not particularly limited, and various materials such as glass, polymer, ceramic, and metal can be used.

The coating method is not particularly limited, and a known method can be used. Examples of the coating method include a method for coating using a spin coater, a dip coater, a die coater, a slit coater, a bar coater, a gravure coater or the like, a Langmuir-Blodgett (LB) film method, a self-assembly method, and a spray coating method.

The drying method and the firing method are not particularly limited, and known methods can be used. For example, heat drying under atmospheric pressure or reduced pressure, natural drying, and the like can be used. The heating method used in heat drying and firing is also not particularly limited, and examples thereof include heating by means of the apparatus such as a hot plate or an oven. The drying temperature is preferably 80°C or higher and 150°C or lower, and the firing temperature is preferably about 150°C or higher and 400°C or lower.

The thickness of the paint film can be appropriately set depending on the intended use, and is, for example, preferably 0.005 $\mu$m or more and 2 $\mu$m or less, and more preferably 0.01 $\mu$m to 1 $\mu$m.

Depending on the film thickness, the haze value is preferably 5% or less, more preferably 2.5% or less, and still more preferably 1.5% or less. The haze of the paint film can be measured with a haze meter in accordance with JIS K 7136. Also, when the paint film is used as a high-refractive-index layer, the refractive index of the paint film is preferably 1.60 or more, preferably 1.80 or more. The refractive index can be measured by means of ellipsometry, and calculated.

The paint film formed on the substrate may be multi-layered. In the case where the paint film is multilayered, each layer may be the same type of paint film or a combination of different paint films. Also, by alternately stacking the high-refractive-index layers as mentioned above and low-refractive-index layers on the substrate, an antireflection film can be formed on the substrate.

The antireflection film may have any configuration as long as it includes the above-mentioned high-refractive-index layer. For example, the antireflection film may be an antireflection film having the high-refractive-index layer and a low-refractive-index layer in this order on a substrate, or an antireflection film having a low-refractive-index layer, the high-refractive-index layer, and a low-refractive-index layer in this order on a substrate. By adjusting the film thickness and the refractive index of each layer in such a layer structure, a desired antireflection film can be designed.

The composition for nanoimprinting according to the present invention includes the organic solvent dispersion of the above-mentioned titanium dioxide fine particles, and the binder resin. Also, various additives may be blended as necessary.

The phrase "for nanoimprinting" in the present application means the use in nanoimprint lithography as a fine pattern formation method, in which a mold having a predetermined pattern is pressed against a curable film formed on a substrate to transfer the pattern of the above-mentioned mold to the curable film.

Also, the term "nanoimprinting" means the transfer of a pattern ranging in size from several nanometers to several micrometers, and is not limited to the nanometer scale.

The binder resin and various types of additives used in the composition for nanoimprinting according to the present invention can be the same as those used in the above-mentioned coating composition. The composition for nanoimprinting can also be prepared using the same method as that for preparing the coating composition.

Further, when the composition for nanoimprinting is used by applying it to a substrate, the above-mentioned composition for nanoimprinting can be used in the same manner as a paint film formed using the above-mentioned coating composition.

The composition for nanoimprinting according to the present invention has high transparency and a high refractive index because of including the organic solvent dispersion of the above-mentioned titanium dioxide fine particles. Therefore, the composition for nanoimprinting can be used in the intended use that is required to have high transparency and a low haze value, such as 3D sensors for autonomous driving and AR waveguides of AR (augmented reality) glasses.

**EXAMPLES**

The following examples and comparative examples are provided, but the present invention is not limited thereto.

[Production Example 1]

Hydrochloric acid (manufactured by Kanto Chemical Co., Inc.) was added to a tin tetrachloride aqueous solution (manufactured by NIHON KAGAKU SANGYO CO., LTD.) such that the amount of tin in terms of $SnO_2$ was 3 g/L and the amount of the hydrochloric acid was 5 g/L, and then the mixture was stirred to prepare a hydrochloric acid-containing tin tetrachloride aqueous solution.

The above-mentioned hydrochloric acid-containing tin tetrachloride aqueous solution was heated to 60°C, and a titanium tetrachloride aqueous solution (50 g/L in terms of $TiO_2$, manufactured by Ishihara Sangyo Kaisha, Ltd.) was added over 15 minutes such that the amount of $SnO_2$ was 3 parts by mass per 100 parts by mass of $TiO_2$, and then the mixture was heated to 100°C, and aged for 1 hour after reaching 100°C.

After the aging, a 20% sodium hydroxide aqueous solution was added until the pH of the liquid became $7.0 \pm 0.2$ thereto while the mixture was allowed to cool. The liquid temperature at the end of addition of the sodium hydroxide aqueous solution (manufactured by Takasugi Pharmaceutical Co., Ltd.) was 70°C.

Next, a sodium aluminate aqueous solution was added thereto over 20 minutes such that the amount of $Al_2O_3$ was 6 parts by mass per 100 parts by mass of $TiO_2$ while the liquid temperature was maintained at 70°C, and then the mixture was aged for 20 minutes.

After aging, a 20% sulfuric acid aqueous solution (manufactured by Ishihara Sangyo Kaisha, Ltd.) was added over 40 minutes to adjust the pH of the liquid to $5.5 \pm 0.2$, and then the mixture was further aged for 1 hour.

After the further aging, filtration was performed with a filter press, and was followed by washing with pure water until the filtrate had the electrical conductivity of 1,500 $\Omega \cdot cm$ or more, thereby collecting the solid content. The collected solid content was dried at 150°C for 8 hours, and the obtained dried product was heated over 7 hours from room temperature to 510 to 550°C in an air atmosphere in an electric furnace, and fired at 510°C to 550°C for 2 hours to obtain a fired product.

The fired product was dispersed at 150 g/L in pure water, sodium pyrophosphate (manufactured by Shimonoseki Mitsui Chemicals, Inc.) was added thereto in an amount of 2 mass% in terms of $P_2O_5$, and a sodium hydroxide aqueous solution (manufactured by Takasugi Pharmaceutical Co., Ltd.) was added thereto to adjust the pH of the liquid to 10.5, thereby preparing a slurry.

The above-mentioned slurry was dispersed by means of a wet grinding machine (STAR MILL LME20 manufactured by Ashizawa Finetech Ltd.) filled with 0.5 mm zirconia beads (manufactured by Toray Industries, Inc.) until the volume-based cumulative 90% particle diameter (LD90) as measured by means of a laser diffraction/scattering method became 3 $\mu$m or less. The above-mentioned wet grinding was performed under conditions of a feed rate of 3.2 L/min and a residence time of 2 minutes and 30 seconds. A 20% aqueous sulfuric acid solution was added to the dispersed slurry to adjust the pH of the slurry to $6.7 \pm 0.2$. The slurry after adjustment of the pH was filtered with a filter press, and washed with pure water until the filtrate had the electrical conductivity of 1,500 $\Omega \cdot cm$ or more, and then the solid content was collected. The collected solid content was dried in a dryer at 150°C for 8 hours. After drying, the resulting product was ground with a hammer mill (MICROPULVERIZER AP-1SH manufactured by Hosokawa Micron Corporation) to obtain Sample 1 of Production Example 1. The hammer mill was operated under conditions of a feed rate of 500 g/min, a rotation speed of 9,500rpm, and a screen diameter of 1 mmΦ. The average primary particle size of Sample 1 was 18 nm.

The measurement conditions for the above-mentioned laser diffraction/scattering method were as follows.

∘ Measurement conditions:
Measurement apparatus: LA-950 manufactured by HORIBA, Ltd.

(1) Particle refractive index: 2.75;
(2) Solvent refractive index: 1.333;
(3) Circulation speed: 5;
(4) Ultrasonic intensity: 5;
(5) Ultrasonication time: 3 min;
(6) Stirring intensity: 5; and
(7) Measurement solvent: solvent obtained by adjusting 0.3% aqueous solution of sodium hexametaphosphate to a pH of 10 with NaOH.

[Production Example 2]

Hydrochloric acid (manufactured by Kanto Chemical Co., Inc.) was added to a tin tetrachloride aqueous solution (manufactured by NIHON KAGAKU SANGYO CO., LTD.) such that the amount of tin in terms of $SnO_2$ was 3 g/L and the amount of hydrochloric acid was 8 g/L, and then the mixture was stirred to prepare a hydrochloric acid-containing tin tetrachloride aqueous solution. Also, an aqueous solution of titanium tetrachloride (200 g/L in terms of $TiO_2$) to which citric acid (manufactured by Showa Kako Co., Ltd.) was added such that the amount of citric acid was 1mol% with respect to 1 mol of $TiO_2$ was prepared.

The above-mentioned hydrochloric acid-containing tin tetrachloride aqueous solution was heated to 60°C, and the titanium tetrachloride aqueous solution was added over 15 minutes such that the amount of $SnO_2$ was 5 parts by mass per 100 parts by mass of $TiO_2$, and then the mixture was aged for 1 hour while the liquid temperature was maintained at 60°C. After aging, a 20% sodium hydroxide aqueous solution (manufactured by Takasugi Pharmaceutical Co., Ltd.) was added while the temperature was raised until the pH of the liquid became 7.0±0.2. The liquid temperature after the end of addition of the sodium hydroxide aqueous solution was 70°C.

Next, a sodium aluminate aqueous solution was added thereto over 20 minutes such that the amount of $Al_2O_3$ was 4 parts by mass per 100 parts by mass of $TiO_2$ while the liquid temperature was maintained at 70°C, and then the mixture was aged for 20 minutes.

After the aging, a 20% sulfuric acid aqueous solution (manufactured by Ishihara Sangyo Kaisha, Ltd.) was added over 40 minutes to adjust the pH of the liquid to 5.5±0.2, and then the mixture was further aged for 1 hour.

After the further aging, filtration was performed with a Nutsche filter, and was followed by washing with pure water until the filtrate had the electrical conductivity of 1,500 Ω·cm or more, thereby collecting the solid content. The collected solid content was dried at 150°C for 8 hours. 30 g of the obtained dried product was taken, and placed in a 50 mL crucible, and fired in an electric furnace under an air atmosphere at 450°C for 2 hours. In the above-mentioned firing, the temperature was raised from room temperature to 450°C under the condition of 10°C/min, and the temperature was lowered to room temperature by natural cooling after firing at 450°C for 2 hours. 10 g of the obtained fired product was taken, and ground for 10 minutes by means of a grinding machine (Ishikawa Grinding Mixer manufactured by Ishikawa Kojo) to obtain Sample 2 of Production Example 2. The average primary particle size of the sample 2 was 17 nm.

[Production Example 3]

Sample 3 of Production Example 3 was prepared in the same manner as in Production Example 2 except for the following: in Production Example 2, the amount of the sodium aluminate aqueous solution to be added was changed such that the amount of $Al_2O_3$ was 2.3 parts by mass per 100 parts by mass of $TiO_2$; and before the sodium aluminate aqueous solution was added, the sodium silicate aqueous solution was added thereto over 20 minutes such that the amount of $SiO_2$ was 2.3 parts by mass per 100 parts by mass of $TiO_2$.

[Production Example 4]

An aqueous solution of titanium tetrachloride (200 g/L in terms of $TiO_2$, manufactured by ISHIHARA SANGYO KAISHA, LTD.) to which citric acid (manufactured by Showa Kako Co., Ltd.) was added such that the amount of citric acid was 1mol% with respect to 1 mol of $TiO_2$ was prepared.

The above-mentioned titanium tetrachloride aqueous solution was heated to a liquid temperature of 60°C, and aged for 1 hour while being maintained at 60°C. After aging, a 20% sodium hydroxide aqueous solution (manufactured by Takasugi Pharmaceutical Co., Ltd.) was added thereto until the pH of the liquid became 7.0±0.2. The liquid temperature at the time of addition of the sodium hydroxide aqueous solution was 70°C. After the aging, a 20% sulfuric acid aqueous solution (manufactured by Ishihara Sangyo Kaisha, Ltd.) was added over 40 minutes to adjust the pH of the liquid to 5.5 ±0.2, and then the mixture was further aged for 1 hour.

After the further aging, filtration was performed with a Nutsche filter, and was followed by washing with pure water until the filtrate had the electrical conductivity of 1,500 Ω·cm or more, thereby collecting the solid content. The collected solid content was dried at 150°C for 8 hours. 30 g of the obtained dried product was taken, and placed in a 50 mL crucible, and fired in an electric furnace under an air atmosphere at 450°C for 2 hours. In the above-mentioned firing, the temperature was raised from room temperature to 450°C under the condition of 10°C/min, and the temperature was lowered to room temperature by natural cooling after firing at 450°C for 2 hours. 10 g of the obtained fired product was taken, and ground for 10 minutes by means of a grinding machine (Ishikawa Grinding Mixer manufactured by Ishikawa Kojo) to obtain Sample 4 of Production Example 4.

[Production Example 5]

Hydrochloric acid (manufactured by Kanto Chemical Co., Inc.) was added to a tin tetrachloride aqueous solution (manufactured by NIHON KAGAKU SANGYO CO., LTD.) such that the amount of tin in terms of $SnO_2$ was 3 g/L and the amount of hydrochloric acid was 8 g/L, thereby preparing a hydrochloric acid-containing tin tetrachloride aqueous solution. Also, an aqueous solution of titanium tetrachloride (200 g/L in terms of $TiO_2$, manufactured by ISHIHARA SANGYO KAISHA, LTD.) to which citric acid (manufactured by Showa Kako Co., Ltd.) was added such that the amount of citric acid was 1mol% with respect to 1 mol of $TiO_2$ was prepared.

The above-mentioned hydrochloric acid-containing tin tetrachloride aqueous solution was heated to 60°C, and the titanium tetrachloride aqueous solution was added over 15 minutes such that the amount of $SnO_2$ was 5 parts by mass per 100 parts by mass of $TiO_2$, and then the mixture was aged for 1 hour while the liquid temperature was maintained at 60°C. After the aging, a 20% sodium hydroxide aqueous solution (manufactured by Takasugi Pharmaceutical Co., Ltd.) was added thereto until the pH of the liquid became 7.0±0.2. The liquid temperature at the time of addition of the sodium hydroxide aqueous solution was 70°C.

After the aging, a 20% sulfuric acid aqueous solution (manufactured by Ishihara Sangyo Kaisha, Ltd.) was added over 40 minutes to adjust the pH of the liquid to 5.5±0.2, and then the mixture was further aged for 1 hour.

After the further aging, filtration was performed with a Nutsche filter, and was followed by washing with pure water until the filtrate had the electrical conductivity of 1,500 Ω·cm or more, thereby collecting the solid content. The collected solid content was dried at 150°C for 8 hours. 30 g of the obtained dried product was taken, and placed in a 50 mL crucible, and fired in an electric furnace under an air atmosphere at 450°C for 2 hours. In the above-mentioned firing, the temperature was raised from room temperature to 450°C under the condition of 10°C/min, and the temperature was lowered to room temperature by natural cooling after firing at 450°C for 2 hours. 10 g of the obtained fired product was taken, and ground for 10 minutes by means of a grinding machine (Ishikawa Grinding Mixer manufactured by Ishikawa Kojo) to obtain Sample 5 of Production Example 5.

[Production Example 6]

An aqueous solution of titanium tetrachloride (200 g/L in terms of $TiO_2$, manufactured by ISHIHARA SANGYO KAISHA, LTD.) to which citric acid (manufactured by Showa Kako Co., Ltd.) was added such that the amount of citric acid was 1mol% with respect to 1 mol of $TiO_2$ was prepared.

The above-mentioned titanium tetrachloride aqueous solution was heated to 60°C, and aged for 1 hour while the liquid temperature was maintained at 60°C. After aging, a 20% sodium hydroxide aqueous solution (manufactured by Takasugi Pharmaceutical Co., Ltd.) was added thereto until the pH of the liquid became 7.0±0.2. The liquid temperature at the time of addition of the sodium hydroxide aqueous solution was 70°C.

Next, a sodium aluminate aqueous solution was added over 20 minutes such that the amount of $Al_2O_3$ was 4 parts by mass per 100 parts by mass of $TiO_2$ while the liquid temperature was maintained at 70°C, and then the mixture was aged for 20 minutes.

After the aging, a 20% sulfuric acid aqueous solution (manufactured by Ishihara Sangyo Kaisha, Ltd.) was added thereto over 40 minutes to adjust the pH of the liquid to 5.5±0.2, and then the mixture was further aged for 1 hour.

After the further aging, filtration was performed with a Nutsche filter, and was followed by washing with pure water until the filtrate had the electrical conductivity of 1,500 Ω·cm or more, thereby collecting the solid content. The collected solid content was dried at 150°C for 8 hours. 30 g of the obtained dried product was taken, and placed in a 50 mL crucible, and fired in an electric furnace under an air atmosphere at 450°C for 2 hours. In the above-mentioned firing, the temperature was raised from room temperature to 450°C under the condition of 10°C/min, and the temperature was lowered to room temperature by natural cooling after firing at 450°C for 2 hours. 10 g of the obtained fired product was taken, and ground for 10 minutes by means of a grinding machine (Ishikawa Grinding Mixer manufactured by Ishikawa Kojo) to obtain Sample 6 of Production Example 6.

[Production Example 7]

Hydrochloric acid (manufactured by Kanto Chemical Co., Inc.) was added to a tin tetrachloride aqueous solution (manufactured by NIHON KAGAKU SANGYO CO., LTD.) such that the amount of tin in terms of $SnO_2$ was 3 g/L and the amount of hydrochloric acid was 8 g/L, and then the mixture was stirred to prepare a hydrochloric acid-containing tin tetrachloride aqueous solution. Also, an aqueous solution of titanium tetrachloride (200 g/L in terms of $TiO_2$) to which citric acid (manufactured by Showa Kako Co., Ltd.) was added such that the amount of citric acid was 1mol% with respect to 1 mol of $TiO_2$ was prepared.

The above-mentioned hydrochloric acid-containing tin tetrachloride aqueous solution was heated to 60°C, and the above-mentioned titanium tetrachloride aqueous solution was added thereto over 15 minutes such that the amount of $SnO_2$ was 5 parts by mass per 100 parts by mass of $TiO_2$, and then the mixture was aged for 1 hour while the liquid temperature was maintained at 60°C. After the aging, a 20% sodium hydroxide aqueous solution (manufactured by Takasugi Pharmaceutical Co., Ltd.) was added thereto while the temperature was raised until the pH of the liquid became $7.0\pm0.2$. The liquid temperature after the end of addition of the sodium hydroxide aqueous solution was 70°C.

Next, a sodium aluminate aqueous solution was added thereto over 20 minutes such that the amount of $Al_2O_3$ was 4 parts by mass per 100 parts by mass of $TiO_2$ while the liquid temperature was maintained at 70°C, and then the mixture was aged for 20 minutes.

After the aging, a 20% sulfuric acid aqueous solution was added over 40 minutes to adjust the pH of the liquid to $5.5\pm0.2$, and then the mixture was aged for 1 hour.

Thereafter, an aqueous solution of cobalt (II) sulfate heptahydrate (manufactured by Kanto Chemical Co., Inc.) was added thereto such that the amount of $Co_2O_3$ was 0.1 parts by mass per 100 parts by mass of $TiO_2$ while the liquid temperature was maintained at 70°C, and then the mixture was further aged for 20 minutes.

After the further aging, filtration was performed with a Nutsche filter, and was followed by washing with pure water until the filtrate had the electrical conductivity of 1,500 $\Omega\cdot$cm or more, thereby collecting the solid content. The collected solid content was dried at 150°C for 8 hours. 30 g of the obtained dried product was taken, and placed in a 50 mL crucible, and fired in an electric furnace (manufactured by KYOEI ELECTRIC KILNS CO., LTD.) under an air atmosphere at 425°C for 2 hours. In the above-mentioned firing, the temperature was raised from room temperature to 425°C under the condition of 10°C/min, and the temperature was lowered to room temperature by natural cooling after firing at 425°C for 2 hours. 10 g of the obtained fired product was taken, and ground for 10 minutes by means of a grinding machine (Ishikawa Grinding Mixer manufactured by Ishikawa Kojo) to obtain Sample 7 of Production Example 7. The average primary particle size of the sample 7 was 19 nm.

[Production Example 8]

Sample 8 of Production Example 8 was prepared in the same manner as in Production Example 7 except that the addition of "cobalt (II) sulfate heptahydrate (manufactured by Kanto Chemical Co., Inc.) such that the amount of $Co_2O_3$ was 0.1 parts by mass" in Production Example 7 was changed to addition of "manganese (II) sulfate pentahydrate (manufactured by Kanto Chemical Co., Inc.) such that the amount of MnO was 0.1 parts by mass". The average primary particle size of Sample 8 was 18 nm.

[Production Example 9]

Sample 9 of Production Example 9 was prepared in the same manner as in Production Example 2 except that after firing at 450°C for 2 hours in Production Example 2, the following step was further incorporated therein. The average primary particle size of Sample 9 was 18 nm.

By using a grinding machine, 10 g of the sample fired at 450°C for 2 hours was ground for 10 minutes. Thereafter, pure water was added thereto such that the amount of the above-mentioned sample was 50 g/L, and the mixture was stirred to prepare a slurry. The above-mentioned slurry was heated to 60°C. After the temperature reached 60°C, a 20 mass% sodium hydroxide aqueous solution (manufactured by Takasugi Pharmaceutical Co., Ltd.) was added to the above-mentioned slurry until the pH of the liquid became $7.0\pm0.2$. Thereafter, a zirconium sulfate aqueous solution (manufactured by Kanto Chemical Co., Inc.) was added thereto over 20 minutes such that the amount of $ZrO_2$ was 1 part by mass per 100 parts by mass of the sample fired at 450°C for 2 hours. The mixture was aged for 20 minutes while the liquid temperature was maintained at 60°C. After the aging, the titanium tetrachloride aqueous solution was added over 20 minutes such that the amount of $TiO_2$ was 1 part by mass per 100 parts by mass of the sample fired at 450°C for 2 hours.

The mixture was further aged for 20 minutes while the liquid temperature was maintained at 60°C. After the further aging, a sodium aluminate aqueous solution (manufactured by Kanto Chemical Co., Inc.) was added thereto over 20 minutes such that the amount of $Al_2O_3$ was 1 part by mass with regard to 100 parts by mass of the sample fired at 450°C for 2 hours. The mixture was additionally aged for 20 minutes while the liquid temperature was maintained at 60°C. After additional aging, filtration was performed with a Nutsche filter, and was followed by washing with pure water until the filtrate had the electrical conductivity of 1,500 Ω·cm or more, thereby collecting the solid content. The collected solid content was dried at 150°C for 8 hours. 10 g of the obtained dried product was taken, and ground for 10 minutes by means of a grinding machine (Ishikawa Grinding Mixer manufactured by Ishikawa Kojo).

<Evaluation 1: Crystal Structure>

By using the titanium dioxide fine particles of Production Examples 1 to 3 and Production Examples 7 to 9 as samples, an X-ray diffraction spectrum for the fine particles of each production example was measured by means of an X-ray diffractometer (Ultima IV, manufactured by Rigaku Corporation) under the conditions of X-ray tube: CuK$\alpha$, tube voltage: 40 kV, tube current: 40 mA, divergence slit: 1/2°, scattering slit: 8 mm, light receiving slit: open, sampling interval: 0.020° and scanning rate: 10.00°/min. For reference, an X-ray diffraction spectrum in Production Example 2 is shown in FIG. 1. As shown in FIG. 1, in the titanium dioxide fine particles of Production Example 2, a peak corresponding to rutile-type titanium dioxide was detected. On the other hand, it was found that peaks corresponding to tin oxide and aluminum oxide were not detected. The similar results were also obtained for the samples of Production Examples 1, 3, and 7 to 9 (data not shown).

By using the XRD spectra of the titanium dioxide fine particles of Production Examples 1 to 3 and 7 to 9, the rutile ratios of the titanium dioxide fine particles of each production example were calculated from the following formula. The results are shown in Table 2.

$$\text{Rutile ratio (\%)} = (Hr / (Hr + Ha)) \times 100.$$

Hr: Height of maximum peak (at $2\theta = 27.5°\pm0.5°$) corresponding to rutile-type crystal in X-ray diffraction spectrum.

Ha: Height of maximum peak (at $2\theta = 25.2°\pm0.5°$) corresponding to anatase-type crystal in X-ray diffraction spectrum.

<Evaluation 2: Elemental Analysis>

The powder of the titanium dioxide fine particles of each of Production Examples 1 to 9 was subjected to pressure molding to obtain a pellet-shaped measurement sample, and then all-element order (i.e., semiquantitative) analysis was performed by means of an X-ray fluorescence spectrometer (specifically, ZSX Primus IV, manufactured by Rigaku Corporation), and each mass ratio of the contained components was determined in terms of $TiO_2$, $SnO_2$, $Al_2O_3$, and $SiO_2$. The measurement results of each production example in evaluation 2 are shown in Table 1.

<Evaluation 3: BET Specific Surface Area>

The BET specific surface area ($m^2/g$) of the powder of the titanium dioxide fine particles of each of Production Examples 1 to 9 was determined using a nitrogen adsorption method (i.e., BET method) by means of an automatic flow-type specific surface area measuring apparatus (specifically, Macsorb HM model-1220, manufactured by Mountech Co., Ltd.). Here, desorption was performed under a temperature condition of room temperature under nitrogen gas flow, and adsorption was performed under a temperature condition of 77 K. The measurement results are shown in Table 1.

<Evaluation 4: Average Primary Particle Size>

Regarding the powder of the titanium dioxide fine particles of each of Production Examples 1 to 3 and 7 to 9, the average primary particle size thereof was calculated as follows. The results are shown in Table 2.

An image of the above-mentioned titanium dioxide fine particles was taken by means of a transmission electron microscope such that the number of primary particles per one visual field is 300 to 700. The primary particle sizes of 300 or more particles on the above-mentioned image as equivalent circle diameters (i.e., Heywood diameters) were measured, and a median value of the number distribution of the particle size thereof was calculated, and taken as the average primary particle size thereof. In calculating the above-mentioned average particle size, image analysis software Macview Version 4.0 (manufactured by Mountech Co., Ltd.) was used.

<Evaluation 5: Average Value of Aspect Ratios of Primary Particles>

The aspect ratios of the titanium dioxide fine particles of each of Production Examples 1 to 3 and 7 to 9 were calculated as follows. The results are shown in Table 2.

An image of the titanium dioxide fine particles was taken by means of a transmission electron microscope such that the number of primary particles per one visual field was 300 to 700. Regarding 300 or more primary particles on the above-mentioned image, the major axis (i.e., the length of the long side of the circumscribed rectangle with the minimum area for each of the primary particles) and the minor axis (i.e., the length of the shorter side of the circumscribed rectangle with the minimum area for each of the primary particles) were measured by means of image analysis software Macview Version 4.0 (Mountech Co., Ltd.). The major axis was divided by the minor axis to calculate the aspect ratio of each of the 300 or more primary particles. The average value of the calculated aspect ratios was calculated.

[Table 1]

| | Amount of $SnO_2$/ Amount of $TiO_2$ (mass%) | Amount of $Al_2O_3$ / Amount of $TiO_2$ (mass%) | Amount of $SiO_2$/ Amount of $TiO_2$ (mass%) | Amount of $SnO_2$/ Amount of $Al_2O_3$ (mass%) | (Amount of $SnO_2$ + Amount of $Al_2O_3$) / Amount of $TiO_2$ (mass%) | BET Ratio Specific Surface Area ($m^2$/g) |
|---|---|---|---|---|---|---|
| Sample 1 | 3 | 6 | 0 | 0.5 | 9 | 111 |
| Sample 2 | 5 | 4 | 0 | 1 | 9 | 121 |
| Sample 3 | 5 | 2 | 2 | 2 | 7 | 150 |
| Sample 4 | 0 | 0 | 0 | - | 0 | 107 |
| Sample 5 | 5 | 0 | 0 | - | 5 | 100 |
| Sample 6 | 0 | 4 | 0 | 0 | 4 | 133 |
| Sample 7 | 5 | 4 | 0 | 1 | 9 | 109 |
| Sample 8 | 5 | 4 | 0 | 1 | 9 | 117 |
| Sample 9 | 5 | 5 | 0 | 1 | 10 | 120 |
| In the table, "-" means that calculation was impossible. | | | | | | |

[Table 2]

| | Rutile Ratio of Titanium Dioxide Fine Particles (%) | Average Primary Particle Size (nm) | Aspect Ratio |
|---|---|---|---|
| Sample 1 | ≧95 | 18 | 1.6 |
| Sample 2 | ≧95 | 17 | 1.5 |
| Sample 3 | ≧95 | 18 | 1.7 |
| Sample 7 | ≧95 | 19 | 1.5 |
| Sample 8 | ≧95 | 18 | 1.5 |
| Sample 9 | ≧95 | 18 | 1.5 |

(Example 1)

A 70 mL mayonnaise bottle was filled with the following: 12.8 g of Sample 1 that is titanium dioxide fine particles; 1.92 g of 3-methacryloxypropyltriethoxysilane KBM-503 (manufactured by Shin-Etsu Silicone Co., Ltd.) that is a silane coupling agent; 0.384 g of Solsperse (registered trademark) 20000 (manufactured by Lubrizol Corporation, amine value 32 mgKOH/g) that is an amino-based dispersant being a dispersant having a basic adsorption group; 24.896 g of propylene glycol monomethyl ether (PGME) that is an organic solvent; and 100 g of zirconia beads having the diameter of 0.05 mm. Thereafter, wet dispersion was performed for 4 hours with a paint shaker (model 5410 manufactured by Red Devil, Inc.). After removal of the zirconia beads, the obtained dispersion was centrifuged under conditions of 2,400G and 30 minutes, and the supernatant liquid was collected to obtain an organic solvent dispersion of Example 1.

The mass ratio of the amine-based dispersant in this organic solvent dispersion to the silane coupling agent was 20 mass%. The amount of the silane coupling agent used herein with regard to the titanium dioxide fine particles was 15 mass%, the amount of the amine-based dispersant used herein with regard to the titanium dioxide fine particles was 3 mass%, and the total amount of both was 18 mass%.

(Example 2)

An organic solvent dispersion of Example 2 was prepared in the same manner as in Example 1 except that the titanium dioxide fine particles used in Example 1 were changed to Sample 2.

(Example 3)

An organic solvent dispersion of Example 3 was prepared in the same manner as in Example 1 except that the amount of Solsperse 20000 used in Example 1 was changed to 0.640 g and the amount of PGME used in Example 1 was changed to 24.640 g.

The mass ratio of the amine-based dispersant in this organic solvent dispersion to the silane coupling agent was 33 mass%. The amount of the silane coupling agent used herein with regard to the titanium dioxide fine particles was 15 mass%, the amount of the amine-based dispersant used herein with regard to the titanium dioxide fine particles was 5 mass%, and the total amount of both was 20 mass%.

(Example 4)

An organic solvent dispersion of Example 4 was prepared in the same manner as in Example 1 except that the titanium dioxide fine particles used in Example 1 were changed to Sample 3.

(Example 5)

A 70 mL mayonnaise bottle was filled with the following: 12.8 g of Sample 2 that is titanium dioxide fine particles; 1.92 g of 3-methacryloxypropyltriethoxysilane KBM-503 (manufactured by Shin-Etsu Silicone Co., Ltd.) that is a silane coupling agent; 0.435 g of Solsperse (registered trademark) 20000 (manufactured by Lubrizol Corporation, amine value 32 mgKOH/g) that is an amine-based dispersant; 24.840 g of propylene glycol monomethyl ether acetate (PGMEA) that is an organic solvent; and 100 g of zirconia beads having the diameter of 0.05 mm. Thereafter, wet dispersion was performed for 4 hours with a paint shaker (model 5410 manufactured by Red Devil, Inc.). After removal of the zirconia beads, the obtained dispersion was centrifuged under conditions of 2,400G and 30 minutes, and the supernatant liquid was collected to obtain an organic solvent dispersion of Example 5.

The mass ratio of the amine-based dispersant in the organic solvent dispersion to the silane coupling agent was 22.6 mass%. The amount of the silane coupling agent used herein with regard to the titanium dioxide fine particles was 15 mass%, the amount of the amine-based dispersant used herein with regard to the titanium dioxide fine particles was 3.4 mass%, and the total amount of both was 18.4 mass%.

(Example 6)

An organic solvent dispersion of Example 6 was prepared in the same manner as in Example 5 except that the organic solvent used in Example 5 was changed to PGME, and the titanium dioxide fine particles used in Example 5 were changed to Sample 7.

(Example 7)

An organic solvent dispersion of Example 7 was prepared in the same manner as in Example 6 except that the titanium dioxide fine particles used in Example 6 were changed to Sample 8.

(Example 8)

An organic solvent dispersion of Example 8 was prepared in the same manner as in Example 6 except that the titanium dioxide fine particles used in Example 6 were changed to Sample 9.

(Comparative Example 1)

An organic solvent dispersion of Comparative Example 1 was prepared in the same manner as in Example 1 except that the titanium dioxide fine particles used in Example 1 were changed to Sample 4.

(Comparative Example 2)

An organic solvent dispersion of Comparative Example 2 was prepared in the same manner as in Example 1 except that the titanium dioxide fine particles used in Example 1 were changed to Sample 5.

(Comparative Example 3)

An organic solvent dispersion of Comparative Example 3 was prepared in the same manner as in Example 1 except that the titanium dioxide fine particles used in Example 1 were changed to Sample 6.

(Comparative Example 4)

An organic solvent dispersion of Comparative Example 4 was prepared in the same manner as in Example 2 except that the amine-based dispersant used in Example 2 was not used and the amount of the silane coupling agent used in Example 2 was changed to 2.304 g.

The mass ratio of the amine-based dispersant in the organic solvent dispersion to the silane coupling agent was 0 mass%. The amount of the silane coupling agent used herein with regard to the titanium dioxide fine particles was 18 mass%, the amount of the amine-based dispersant used herein with regard to the titanium dioxide fine particles was 0 mass%, and the total amount of both was 18 mass%.

<Evaluation 6: Dispersion Yield>

Each of the organic solvent dispersions of Examples 1 to 8 and Comparative Examples 1 to 4 was centrifuged at 2,400G for 30 minutes, and the supernatant liquid thereof was collected. The supernatant liquid was dried at 150°C for at least 1 hour until the weight of the supernatant liquid no longer decreased, and the amount of the resulting solid content was measured (specifically, the weight of the resulting solid content was measured, and the solid content concentration in the supernatant liquid was calculated). The dispersion yield was calculated by dividing the amount (specifically, the solid content concentration of the supernatant liquid) by the solid content concentration during preparation (that is, before centrifugation) of the organic solvent dispersion of each of Examples 1 to 8 and Comparative Examples 1 to 4.

<Evaluation 7: Transmittance of Dispersion>

Regarding the above-mentioned supernatant liquid of the organic solvent dispersion after centrifugation, the concentration of the titanium dioxide fine particles in the dispersion was adjusted to 12 g/L, and the average transmittance of the dispersion in a range of 380 nm to 780 nm was measured using a spectrophotometer (V-770, manufactured by JASCO Corporation, quartz cell thickness: 10 mm). The concentration of the titanium dioxide fine particles in the dispersion was determined from the amount of residues after heating at 800°C. The measurement results are shown in Table 3.

<Evaluation 8: D50 and D90>

Regarding the above-mentioned supernatant liquid of the centrifuged organic solvent dispersion, D50 and D90 on a volume basis were measured by means of a dynamic light scattering particle size analyzer (NANOTRAC (registered trademark) WAVE II EX150, manufactured by MicrotracBEL Corp.) or the like under the following conditions.

o Measurement conditions (case where solvent is PGME):

(1) Solvent: PGME, with a refractive index of 1.4 and a viscosity of 1.75 (at 25°C) to 1.55 (at 30°C);
(2) Particle refractive index: 2.55;
(3) Particle density: 4.2 g/cm$^3$; and
(4) Loading index: 0.1 to 0.3.

o Measurement conditions (case where solvent is PGMEA):

(1) Solvent: PGMEA, with s a refractive index of 1.4 and a viscosity of 1.098 (at 20°C) to 0.948 (at 30°C);

(2) Particle refractive index: 2.55;

(3) Particle density: 4.2 g/cm$^3$; and

(4) Loading index: 0.1 to 0.3.

[Table 3]

| | Titanium dioxide fine particles | Silane coupling agent | Dispersant | Dispersion yield (%) | Transmittance (%) | D50/D90 (nm) |
|---|---|---|---|---|---|---|
| Example 1 | Sample 1 | Applicable | Applicable | 94 | 37 | 27/43 |
| Example 2 | Sample 2 | Applicable | Applicable | 95 | 47 | 24/40 |
| Example 3 | Sample 1 | Applicable | Applicable | 96 | 34 | 27/45 |
| Example 4 | Sample 3 | Applicable | Applicable | 94 | 48 | 26/44 |
| Example 5 | Sample 2 | Applicable | Applicable | 92 | 51 | 24/40 |
| Example 6 | Sample 7 | Applicable | Applicable | 92 | 41 | 26/42 |
| Example 7 | Sample 8 | Applicable | Applicable | 92 | 45 | 25/42 |
| Example 8 | Sample 9 | Applicable | Applicable | 94 | 45 | 25/40 |
| Comparative Example 1 | Sample 4 | Applicable | Applicable | 37 | Unmeasured (※1) | Unmeasured (※1) |
| Comparative Example 2 | Sample 5 | Applicable | Applicable | Not measurable (※2) | Not measurable (※2) | Not measurable (※2) |
| Comparative Example 3 | Sample 6 | Applicable | Applicable | 39 | Unmeasured (※1) | Unmeasured (※1) |
| Comparative Example 4 | Sample 2 | Applicable | Not applicable | 94 | 23 | 33/55 |
| ※1 Transmittance, D50 and D90 were not measured because the dispersion yield was less than 50%. ※2　　　Measurement　　　was　　　impossible　　　because　　　of　　　gelation. | | | | | | |

In each of Examples 1 to 3 and 5, the titanium dioxide fine particles included in the organic solvent dispersion include the tin component and the aluminum component, and the organic solvent dispersion includes the silane coupling agent and the dispersant having a basic adsorption group. The organic solvent dispersions of Examples 1 to 3 and 5 have a dispersion yield of 50% or more and a transmittance of 25% or more, and thus it is confirmed that they have excellent dispersion stability.

Also, it is confirmed that the organic solvent dispersion of Example 4, which uses the titanium dioxide fine particles including the silicon component in addition to the tin component and the aluminum component, is equivalent in dispersion yield and transparency to the organic solvent dispersions of Examples 1 to 3 and 5.

Further, it is also confirmed that the organic solvent dispersion of Example 6 or Example 7, each of which uses the titanium dioxide fine particles including the cobalt component or the manganese component in addition to a tin component and an aluminum component, is equivalent in dispersion yield and transparency to the organic solvent dispersions of Examples 1 to 3 and 5.

It is also confirmed that the organic solvent dispersion of Example 8, which uses the titanium dioxide fine particles including the tin component and the aluminum component and having the film of the inorganic compound on the surfaces thereof, is equivalent in dispersion yield and transparency to the organic solvent dispersions of Examples 1 to 3 and 5.

On the other hand, each of the organic solvent dispersions of Comparative Examples 1 to 3, which use the titanium dioxide fine particles that do not include a tin component and/or an aluminum component, has a dispersion yield or a transmittance of less than 50%, of less than 25%, or undergoes gelation, so that the dispersion stability is not sufficient.

Also, the organic solvent dispersion of Comparative Example 4, which uses the titanium dioxide fine particles including a tin component and an aluminum component but does not include the dispersant having a basic adsorption group, has a transmittance of less than 25%, so that the dispersion stability is not sufficient.

(Example 9)

[Preparation of Coating Composition]

In the organic solvent dispersion described in Example 1, with regard to 70 parts by mass of the solid content of the organic solvent dispersion, 14.3 parts by mass of LIGHT ACRYLATE (registered trademark) POB-A (acrylic monomer, manufactured by Kyoeisha Chemical Co., Ltd.), 14.3 parts by mass of ARONIX (registered trademark) M-309 (trimethylolpropane triacrylate, manufactured by Toagosei Company, Limited) as an ultraviolet curable resin, and 1.4 parts by mass of Omnirad (registered trademark)-907 (manufactured by IGM RESINS B.V) as a curing polymerization initiator were mixed together, thereby obtaining a coating composition. The solid content of the organic solvent dispersion was determined from the amount of residues after heating at 150°C.

[Preparation of Paint Film]

The above-mentioned coating composition was applied to a washed glass plate by means of spin coating (1,000 rpm $\times$ 8 sec), dried at 90°C for 3 minutes, and then exposed to a high-pressure mercury lamp at an integrated light amount of 3 J/cm$^2$ to obtain a paint film of Example 9.

(Example 10)

A paint film of Example 10 was prepared in the same manner as in Example 9 except that the organic solvent dispersion described in Example 2 was used instead of that used in Example 9.

(Example 11)

A paint film of Example 11 was prepared in the same manner as in Example 9 except that the organic solvent dispersion described in Example 4 was used instead of that used in Example 9.

(Example 12)

A paint film of Example 12 was prepared in the same manner as in Example 9 except that the organic solvent dispersion described in Example 5 was used instead of that used in Example 9.

(Example 13)

A paint film of Example 13 was prepared in the same manner as in Example 9 except that the organic solvent dispersion described in Example 6 was used instead of that used in Example 9.

(Example 14)

A paint film of Example 14 was prepared in the same manner as in Example 9 except that the organic solvent dispersion described in Example 7 was used instead of that used in Example 9.

(Example 15)

A paint film of Example 15 was prepared in the same manner as in Example 9 except that the organic solvent dispersion described in Example 8 was used instead of that used in Example 9.

<Evaluation 7: Haze and Refractive Index of Paint Film>

The haze of the paint film obtained in each of Examples 9 to 15 was measured by means of a haze meter (COH-7700 (manufactured by Nippon Denshoku Industries Co., Ltd.)) according to JIS K 7136.
The thickness and the refractive index at a measurement wavelength of 589 nm for the paint film were measured by means of a visible spectrophotometric ellipsometer (SmartSE (manufactured by HORIBA, Ltd.)). The results are shown in Table 4.

[Table 4]

|  | Haze (%) | Refractive index | Thickness ($\mu$m) |
|---|---|---|---|
| Example 9 | 0.16 | 1.83 | 1.82 |
| Example 10 | 0.09 | 1.83 | 1.82 |
| Example 11 | 0.10 | 1.83 | 1.90 |
| Example 12 | 0.08 | 1.81 | 1.32 |
| Example 13 | 0.08 | 1.83 | 1.69 |
| Example 14 | 0.09 | 1.83 | 1.70 |
| Example 15 | 0.09 | 1.81 | 1.72 |

As shown in Table 4, all of the paint films obtained in Examples 9 to 15 had a haze of 5% or less and a refractive index of 1.60 or more. From these results, it can be confirmed that the obtained coating films have high transparency and high refractive index.

## INDUSTRIAL APPLICABILITY

The organic solvent dispersion including the titanium dioxide fine particles according to the present invention has excellent dispersion stability. The organic solvent dispersion according to the present invention has a high yield and high transparency. By using the organic solvent dispersion of the present invention, a paint film having high transparency and high refractive index can be formed.

## Claims

1. An organic solvent dispersion of titanium dioxide fine particles comprising:

   the titanium dioxide fine particles in which a titanium component, a tin component and an aluminum component are detected by means of X-ray fluorescence measurement, and an X-ray diffraction peak derived from rutile-type titanium dioxide is observed and X-ray diffraction peaks derived from a tin component and an aluminum component are not observed by means of powder X-ray diffraction measurement;
   an organic solvent;
   a silane coupling agent; and
   a dispersant having a basic adsorption group.

2. An organic solvent dispersion of titanium dioxide fine particles comprising:

   the titanium dioxide fine particles in which a titanium component, a tin component and an aluminum component are detected by means of X-ray fluorescence measurement, and only an X-ray diffraction peak derived from rutile-type titanium dioxide is observed and X-ray diffraction peaks derived from a tin component and an aluminum component are not observed by means of powder X-ray diffraction measurement;
   an organic solvent;
   a silane coupling agent; and
   a dispersant having a basic adsorption group.

3. The organic solvent dispersion of titanium dioxide fine particles according to claim 1 or 2, wherein the titanium dioxide fine particles comprise titanium dioxide fine particles in which a tin component and an aluminum component are present as a solid solution.

4. The organic solvent dispersion of titanium dioxide fine particles according to claim 1 or 2, wherein a total of an amount of the tin component and an amount of the aluminum component with respect to an amount of the titanium component in the titanium dioxide fine particles is 0.6 mass% or more and 30 mass% or less when expressed as a mass ratio given by [(amount of $SnO_2$ + amount of $Al_2O_3$)/amount of $TiO_2$],

wherein the amount of $TiO_2$ is the amount of the titanium component in terms of the amount of $TiO_2$, the amount of $SnO_2$ is the amount of the tin component in terms of the amount of $SnO_2$, and the amount of $Al_2O_3$ is the amount of the aluminum component in terms of the amount of $Al_2O_3$.

5. The organic solvent dispersion of titanium dioxide fine particles according to claim 1 or 2,
   wherein the amount of the tin component with respect to the amount of the aluminum component is 0.01 mass% or more and 40 mass% or less when expressed as a mass ratio given by [amount of $SnO_2$/amount of $Al_2O_3$],
   wherein the amount of $Al_2O_3$ is the amount of the aluminum component in terms of the amount of $Al_2O_3$, and the amount of $SnO_2$ is the amount of the tin component in terms of the amount of $SnO_2$.

6. The organic solvent dispersion of titanium dioxide fine particles according to claim 1 or 2, wherein a mass ratio of the dispersant having a basic adsorption group to the silane coupling agent is 15 mass% or more and 75 mass% or less.

7. The organic solvent dispersion of titanium dioxide fine particles according to claim 1 or 2,
   wherein the titanium dioxide fine particles comprise titanium dioxide fine particles in which one or more components selected from the group consisting of a silicon component, a cobalt component and a manganese component are further detected by means of X-ray fluorescence measurement, and X-ray diffraction peaks derived from one or more components selected from the group consisting of a silicon component, a cobalt component and a manganese component are not observed by means of powder X-ray diffraction measurement.

8. The organic solvent dispersion of titanium dioxide fine particles according to claim 1 or 2, wherein the titanium dioxide fine particles comprise titanium dioxide fine particles in which one or more components selected from the group consisting of the silicon component, the cobalt component and the manganese component are present as a solid solution.

9. The organic solvent dispersion of titanium dioxide fine particles according to claim 1 or 2, wherein surfaces of the titanium dioxide fine particles are covered with an inorganic compound.

10. A coating composition comprising the organic solvent dispersion of titanium dioxide fine particles according to claim 1 or 2, and a binder resin.

11. A paint film comprising the organic solvent dispersion of titanium dioxide fine particles according to claim 1 or 2, and a binder resin.

12. A composition for nanoimprinting comprising the organic solvent dispersion of titanium dioxide fine particles according to claim 1 or 2, and a binder resin.

13. A method for producing an organic solvent dispersion of titanium dioxide fine particles, the method comprising the step of dispersing, in an organic solvent, the following:

    titanium dioxide fine particles in which a titanium component, a tin component and an aluminum component are detected by means of X-ray fluorescence measurement, and an X-ray diffraction peak derived from rutile-type titanium dioxide is observed and X-ray diffraction peaks derived from a tin component and an aluminum component are not observed by means of powder X-ray diffraction measurement;
    a silane coupling agent; and
    a dispersant having a basic adsorption group.

14. A method for producing an organic solvent dispersion of titanium dioxide fine particles, the method comprising the step of dispersing, in an organic solvent, the following:

    titanium dioxide fine particles in which a titanium component, a tin component and an aluminum component are detected by means of X-ray fluorescence measurement, and only an X-ray diffraction peak derived from rutile-type titanium dioxide is observed and X-ray diffraction peaks derived from a tin component and an aluminum component are not observed by means of powder X-ray diffraction measurement;
    a silane coupling agent; and
    a dispersant having a basic adsorption group.

15. The method for producing an organic solvent dispersion of titanium dioxide fine particles according to claim 13 or 14, further comprising centrifuging the organic solvent dispersion.

16. The method for producing an organic solvent dispersion of titanium dioxide fine particles according to claim 13 or 14, wherein the titanium dioxide fine particles are produced by the following steps:

Step (1): a step of hydrolyzing a mixture of titanium (oxy)chloride and a tin compound, or a step of hydrolyzing titanium (oxy)chloride in the presence of core particles obtained by hydrolyzing a tin compound;
Step (2): a step of mixing a product obtained by the hydrolysis in the Step (1) with an aluminum compound; and
Step (3): a step of performing a treatment comprising firing the mixture of the product obtained by the hydrolysis in the Step (1) with the aluminum compound at a temperature of 250°C or higher and 1,000°C or lower.

17. The method for producing an organic solvent dispersion of titanium dioxide fine particles according to claim 16, wherein the Step (1) is a step of hydrolyzing a mixture of titanium (oxy)chloride, a tin compound, and a carboxylic acid or a salt thereof, or a step of adding titanium (oxy)chloride, and a carboxylic acid or a salt thereof in the presence of core particles obtained by hydrolyzing a tin compound, and hydrolyzing the titanium (oxy)chloride.

# FIG. 1

## INTERNATIONAL SEARCH REPORT

| | International application No. |
|---|---|
| | **PCT/JP2024/023201** |

### A.  CLASSIFICATION OF SUBJECT MATTER

*C01G 23/053*(2006.01)i; *C09C 1/36*(2006.01)i; *C09C 1/40*(2006.01)i; *C09D 7/61*(2018.01)i; *C09D 17/00*(2006.01)i; *C09D 201/00*(2006.01)i
FI:   C01G23/053; C09D17/00; C09C1/36; C09C1/40; C09D7/61; C09D201/00

According to International Patent Classification (IPC) or to both national classification and IPC

### B.  FIELDS SEARCHED

Minimum documentation searched (classification system followed by classification symbols)

C01G23/053; C09C1/36; C09C1/40; C09D7/61; C09D17/00; C09D201/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C.  DOCUMENTS CONSIDERED TO BE RELEVANT

| Category* | Citation of document, with indication, where appropriate, of the relevant passages | Relevant to claim No. |
|---|---|---|
| A | JP 2009-227500 A (TAYCA CORP.) 08 October 2009 (2009-10-08)<br>entire text | 1-17 |
| A | JP 2013-203929 A (ISHIHARA SANGYO KAISHA, LTD.) 07 October 2013 (2013-10-07)<br>entire text | 1-17 |
| A | WO 2022/239788 A1 (JGC CATALYSTS AND CHEMICALS LTD.) 17 November 2022 (2022-11-17)<br>entire text | 1-17 |
| A | JP 2003-327430 A (ISHIHARA SANGYO KAISHA, LTD.) 19 November 2003 (2003-11-19)<br>entire text | 1-17 |

☐ Further documents are listed in the continuation of Box C.      ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **17 September 2024** | **01 October 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2024/023201**

| Patent document cited in search report | | | Publication date (day/month/year) | Patent family member(s) | | | Publication date (day/month/year) |
|---|---|---|---|---|---|---|---|
| JP | 2009-227500 | A | 08 October 2009 | (Family: none) | | | |
| JP | 2013-203929 | A | 07 October 2013 | (Family: none) | | | |
| WO | 2022/239788 | A1 | 17 November 2022 | EP<br>entire text<br>CN | 4339159<br><br>117295691 | A1<br><br>A | |
| JP | 2003-327430 | A | 19 November 2003 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2021106747 A1

- JP 2015221742 A

**Non-patent literature cited in the description**

- *RSC Adv.*, 2020, vol. 10, 43592-43598